# EUROPÄISCHE PATENTSCHRIFT

(11) **EP 1 460 454 B1**
(45) Veröffentlichungstag und Bekanntmachung des Hinweises auf die Patenterteilung: **11.05.2011**
(21) Anmeldenummer: 04005478.5
(22) Anmeldetag: 08.03.2004
(51) Int. Cl.: G01S 17/93

(54) **Verfahren zur gemeinsamen Verarbeitung von tiefenaufgelösten Bildern und Videobildern**
Method for combined processing of high resolution images and video images
Procédé de traitement combiné d'images à haute définition et d'images vidéo

(30) Priorität: 19.03.2003 DE 10312249
(43) Veröffentlichungstag der Anmeldung: 22.09.2004
(73) Patentinhaber: SICK AG, 79183 Waldkirch (DE)
(72) Erfinder: Kämpchen, Nico, 89081 Ulm (DE); Lages, Ulrich, Dr., 21031 Hamburg (DE); Dietmayer, Klaus, Prof. Dr., 89075 Ulm (DE)
(74) Vertreter: Manitz, Finsterwald & Partner GbR

(56) Entgegenhaltungen:
- WO-A-02/103385
- US-A- 5 128 874
- KATO, T. ET AL: "An Obstacle Detection Method by Fusion of Radar and Motion Stereo" IEEE TRANSACTIONS ON INTELLIGENT TRANSPORTATION SYSTEMS, Bd. 3, Nr. 3, September 2002 (2002-09), XP002311675
- BARRON J L ET AL: "SYSTEMS AND EXPERIMENT PERFORMANCE OF OPTICAL FLOW TECHNIQUES" INTERNATIONAL JOURNAL OF COMPUTER VISION, KLUWER ACADEMIC PUBLISHERS, NORWELL, US, Bd. 12, Nr. 1, 1994, Seiten 43-77, XP001109171 ISSN: 0920-5691
- STILLER C. ET AL: 'MULTISENSOR OBSTACLE DETECTION AND TRACKING' IMAGE AND VISION COMPUTING, ELSEVIER, GUILDFORD, GB LNKD- DOI:10.1016/S0262-8856(99)00034-7 Bd. 18, Nr. 5, 01 April 2000, Seiten 389 - 396, XP001179983 ISSN: 0262-8856

## Beschreibung

Die vorliegende Erfindung betrifft ein Verfahren zur Verarbeitung von zyklisch erfassten, tiefenaufgelösten Bildern und Videobildern eines gemeinsamen Erfassungsbereichs sowie eine Vorrichtung zur Überwachung eines Überwachungsbereichs. Ein derartiges Verfahren bzw. eine derartige Vorrichtung mit den Merkmalen des Oberbegriffs des Anspruchs 1 bzw. 31 ist aus C. Stiller et al., "Multisensor obstacle detection and tracking". Image and Vision Computing 18 (2000) 389-396 bekannt.

Zur Überwachung von Überwachungsbereichen, insbesondere vor Fahrzeugen, können Sensoren für elektromagnetische Strahlung, beispielsweise Laserscanner, eingesetzt werden, mittels derer im Folgenden als "tiefenaufgelöst" bezeichnete Bilder eines den Überwachungsbereich umfassenden Erfassungsbereichs erfassbar sind. Diese tiefenaufgelösten Bilder umfassen wenigstens einen, in der Regel aber mehrere Entfernungsbildpunkte, die die Lage eines von dem Sensor erfassten Gegenstandspunktes auf einem Gegenstand in wenigstens einer Abtastebene des Sensors wiedergeben. Insbesondere enthalten die Entfernungsbildpunkte Daten, mittels derer der Abstand des Gegenstandspunkts von dem Sensor und ein auf eine vorgegebene Achse des Sensors bezogener Winkel, unter dem der Gegenstandspunkt erfasst wurde, ermittelbar ist.

Der Überwachungsbereich wird dann überwacht, indem tiefenaufgelöste Bilder erfasst werden und auf der Basis der erfassten tiefenaufgelösten Bilder eine Objektverfolgung durchgeführt wird. Idealerweise entspricht dabei ein Objekt einem erfassten Gegenstand.

Zur Verfolgung der Objekte werden die tiefenaufgelösten Bilder segmentiert, indem Mengen von Entfernungsbildpunkten gebildet werden, die entsprechend einem Segmentierungskriterium als benachbart angesehen werden. Die in jedem Zyklus gebildeten Segmente werden dann Objekten in dem vorhergehenden Zyklus zugeordnet und aus den zugeordneten Segmenten bzw. deren Entfernungsbildpunkten werden neue Lagen der Objekte bestimmt.

Zur besseren Verfolgung der Objekte werden die Segmente dabei nicht den Objekten des vorhergehenden Zyklus direkt zugeordnet, sondern es werden Lagen der Objekte in dem aktuellen Zyklus prädiziert, auf deren Basis die Segment-Objekt-Zuordnung erfolgen kann.

In Situationen mit vielen Gegenständen, beispielsweise im Innenstadtverkehr, treten häufig Situationen auf, in denen Gegenstände teilweise oder auch ganz für kurze Zeit verdeckt werden. Weiterhin kann sich durch eine schnelle Drehung eines Gegenstands dessen Kontur in dem tiefenaufgelösten Bild verändern. Dies kann dazu führen, dass für einen Gegenstand unterschiedliche Anzahlen von Entfernungsbildpunkten erfasst werden, die unter Umständen zu Segmenten zusammengefasst werden, deren Anzahl sich von der im vorhergehenden Zyklus unterscheidet. Dies kann die Segment-Objekt-Zuordnung wesentlich erschweren. Weiterhin kann sich das Erscheinungsbild von ruhenden Gegenständen durch die Eigenbewegung des Fahrzeugs ändern. Dies ist insbesondere dann problematisch, wenn diese, wie zum Beispiel Büsche am Fahrbahnrand, eine unregelmäßige Kontur aufweisen, die die Wiedererkennung eines entsprechenden Objekts erschwert.

Die Veröffentlichung von T. Kato et al., "An Obstacle Detection Method by Fusion of Radar and Motion Stereo", IEEE Transactions on Intelligent Transportation Systems, Vol. 3, No. 3, September 2002, offenbart ein Verfahren, bei dem zur Erkennung eines Objekts mittels eines Millimeterwellenradars und einer Videokamera ermittelte Daten fusioniert werden. Hierbei ermittelt das Millimeterwellenradar zunächst die Entfernung zu dem Objekt. Danach werden basierend auf der Entfernungsmessung und der Bewegung von Bildbestandteilen zwischen nacheinander aufgenommenen Videobildern die Begrenzungen des Objekts bestimmt.

US 5,128,874 beschreibt ein Vorrichtung zur Erkennung von Objekten, bei dem mittls passiver Sensoren eingelesene digitalisierte Videobilder oder FLIR-Bilder zur Berechnung eines optischen Flusses verwendet werden, wobei Daten eines inertialen Navigationssensors dazu verwendet werden, eine Roll-, Neigungs- oder Gierbewegung der Vorrichtung zu kompensieren, so dass nacheinander aufgenommene Bilder lediglich einer Translationsbewegung unterworfen sind, so dass Entfernungen bestimmbar sind. Darüber hinaus kann ein Lasersensor verwendet werden, der zur Detektion von kleinen Hindernissen wie z.B. Drähten dient, die in Bewegungsrichtung der Vorrichtung liegen. Ferner kann ein Bewegungsstereosensor mit einem breiten Sichtfeld verwendet werden, so dass ein seitliches Manöver ausgeführt werden kann, wenn ein Hindernis festgestellt wird.

Der vorliegenden Erfindung liegt daher die Aufgabe zugrunde, ein Verfahren bereitzustellen, das eine gute Verarbeitung tiefenaufgelöster Bilder eines Überwachungsbereichs auch in Situationen mit mehr als einem Gegenstand in dem Überwachungsbereich erlaubt, sowie eine Vorrichtung zu schaffen, mittels derer das Verfahren durchführbar ist.

Die Aufgabe wird gelöst durch ein Verfahren mit den Merkmalen des Anspruchs 1.

Bei dem erfindungsgemäßen Verfahren zur Verarbeitung von zyklisch erfassten, tiefenaufgelösten Bildern und Videobildern eines gemeinsamen Erfassungsbereichs, die jeweils Gegenstandspunkten auf wenigstens einem Gegenstand in dem Erfassungsbereich entsprechende Entfernungsbildpunkte bzw. Videobildpunkte umfassen, wird in aufeinander folgenden Zyklen für jeweils wenigstens einen Entfernungsbildpunkt für einen dem Entfernungsbildpunkt entsprechenden Gegenstandspunkt ein optischer Fluss ermittelt.

Die Aufgabe wird weiterhin gelöst durch eine Vorrichtung mit den Merkmalen des Anspruchs 31.

Das erfindungsgemäße Verfahren ist zusammen mit einer Erfassung der tiefenaufgelösten Bilder und der Videobilder mittels der erfindungsgemäßen Vorrichtung durchführbar.

Die erfindungsgemäße Vorrichtung zur Überwachung eines Überwachungsbereichs umfasst einen Sensor für elektromagnetische Strahlung, mittels dessen in zeitlicher Folge tiefenaufgelöste Bilder eines ersten Erfassungsbereichs erfassbar sind, ein Videosystem, mittels dessen in einer auf die Erfassungszeiten der tiefenaufgelösten Bilder abgestimmten zeitlichen Folge Videobilder eines zweiten Erfassungsbereichs, der sich wenigstens teilweise mit dem ersten Erfassungsbereich in dem Überwachungsbereich überschneidet, erfassbar sind, eine erste Einrichtung zur Verarbeitung von mit dem Sensor für elektromagnetische Strahlung erfassten tiefenaufgelösten Bildern, und eine zweite Einrichtung zur Ermittlung eines optischen Flusses für wenigstens Teilbereiche der Videobilder, die durch Daten bestimmbar sind, die aus den tiefenaufgelösten Bildern mit Hilfe der ersten Einrichtung zur Verarbeitung tiefenaufgelöster Bilder ermittelbar sind.

Ein Aspekt der vorliegenden Erfindung besteht darin, die Informationen aus den tiefenaufgelösten Bildern mit Informationen aus entsprechenden Videobildern zu verknüpfen und so zu wenigstens einem Entfernungsbildpunkt zusätzliche Daten zu erhalten, die bei der Verarbeitung der Entfernungsbildpunkte verwendet werden können. Insbesondere wird ausgenutzt, dass bei einer Bewegung eines Gegenstands in der Regel in dem tiefenaufgelösten Bild und dem Videobild erfasste Bereiche auf dem Gegenstand mitbewegt werden. Weisen die Bereiche in dem Videobild einen Intensitätsverlauf bzw. entsprechende Merkmale auf, äußert sich die Bewegung des Gegenstands näherungsweise als Verschiebung der entsprechenden Intensitätsverläufe bzw. Merkmale in dem Videobild. Diese Verschiebung bzw. die Geschwindigkeit der Verschiebung ist aber über den optischen Fluss ermittelbar. Diese Bewegungsinformation aus den Videobildern kann dann den entsprechenden Bereichen des Gegenstands bzw. entsprechenden Entfernungsbildpunkten zugeordnet werden.

Das erfindungsgemäße Verfahren geht daher aus von zyklisch erfassten tiefenaufgelösten Bildern und Videobildern eines gemeinsamen Erfassungsbereichs.

Tiefenaufgelöste Bilder umfassen dabei wenigstens einen, in der Regel mehrere Entfernungsbildpunkte, die Daten in Bezug auf die Lage und insbesondere die Entfernung entsprechender erfasster Gegenstandspunkte auf einem Gegenstand von einem zur Erfassung verwendeten Sensor enthalten. Da Sensoren zur Erfassung solcher tiefenaufgelöster Bilder in der Regel keine Punkte im mathematischen Sinne auflösen können, wird dabei unter einem Gegenstandspunkt ein Bereich auf der Oberfläche eines Gegenstands verstanden, der von dem entsprechenden Sensor räumlich auflösbar ist. Zur einfachen und intuitiven Formulierung wird im Folgenden von der Lage von Entfernungsbildpunkten gesprochen, um die durch die Daten in Bezug auf die Lage der Gegenstandspunkte definierten Positionen zu benennen.

Bei der erfindungsgemäßen Vorrichtung ist zur Erfassung der tiefenaufgelösten Bilder des ersten Erfassungsbereichs wenigstens ein Sensor für elektromagnetische Strahlung vorgesehen, bei dem es sich grundsätzlich um einen beliebigen Sensor für elektromagnetische Strahlung handeln kann, mittels dessen die tiefenaufgelösten Bilder, vorzugsweise ohne Verwendung eines optischen Flusses, erfassbar sind. Beispielsweise kann ein Stereovideokamerasystem mit zwei Videokameras verwendet werden, die in einer Ebene, in der eine Entfernung von dem Stereovideokamerasystem erfasst wird, beabstandet angeordnet sind. Vorzugsweise werden jedoch Sensoren verwendet, bei denen wenigstens ein Abtaststrahl mit elektromagnetischer Strahlung zur Abtastung wenigstens einer Abtastebene verwendet wird. Dabei können mehrere Abtaststrahlen zur im Wesentlichen gleichzeitigen Abtastung einer jeweiligen Abtastebene verwendet werden oder es kann, vorzugsweise, ein Abtaststrahl in der Abtastebene geschwenkt werden, wobei jeweils von Gegenständen zurückgeworfene Strahlung mit einem entsprechenden Detektor empfangen wird.

Die bei dem erfindungsgemäßen Verfahren verwendeten Videobilder umfassen Videobildpunkte, die wenigstens Daten in Bezug auf Intensitätswerte erfasster Gegenstandsbereiche als Funktion einer Lage auf einer Empfangsfläche umfassen, auf der entsprechende optische Strahlung empfangen wird. Entsprechend einer Abbildungsgeometrie des zur Erfassung verwendeten Videosystems und gegebenenfalls einer Weiterverarbeitung der erfassten Daten ergeben sich aus den Positionen von erfassten Gegenstandsbereichen die Lagen, an denen in dem Videobild Intensitätswerte gegeben sind. Die Lagen können insbesondere in einer Ebene angegeben sein.

Es können grundsätzlich auch Farbvideobilder verwendet werden, bei denen die Videobildpunkte Daten in Bezug auf Intensitätswerte für wenigstens zwei Farben aufweisen.

Die erfindungsgemäße Vorrichtung weist zur Erfassung von Videobildern ein Videosystem auf, das wenigstens eine Videokamera umfassen kann, die eine abbildende Optik und ein Sensorsystem zum ortsaufgelösten Empfang von optischer Strahlung, beispielsweise von sichtbarem Licht oder infraroter Strahlung, aufweist. Als Videokamera kann je nach Anwendung insbesondere eine Weitwinkel- oder eine Panoramakamera zum Einsatz kommen. Zur Überwachung des Fernbereichs ist eine Videokamera mit einem Teleobjektiv besonders geeignet. Es können grundsätzlich auch Videokameras mit Zoom-Objektiven verwendet werden. Weiterhin kann als Sensorsystem ein Schwarz-Weiß- bzw. Graustufensystem oder auch ein farbempfindliches System zum Einsatz kommen. Dabei können beispielsweise entsprechende CCD- oder CMOS- Sensorelemente verwendet werden.

Die Erfassungsbereiche des Sensors für elektromagnetische Strahlung und des Videosystems brauchen dabei nicht identisch zu sein, es genügt, dass diese sich im Überwachungsbereich überschneiden.

Für wenigstens einen gegebenen Entfernungsbildpunkt wird bei dem erfindungsgemäßen Verfahren ein optischer Fluss auf der Basis von wenigstens zwei in zeitlichem Abstand erfassten Videobildern ermittelt. Unter dem optischen Fluss wird erfindungsgemäß ein wenigstens näherungsweises Abbild von Geschwindigkeiten von Gegenstandspunkten oder von Verschiebungen von Gegenstandspunkten innerhalb eines vorgegebenen Zeitintervalls in drei Dimensionen auf einer zur Definition des optischen Flusses verwendeten Fläche verstanden. Im Rahmen der Erfindung sind beide Definitionen, d.h. die über Geschwindigkeiten und die über Verschiebungen gleichwertig, da sich die Werte durch Skalierung mit dem entsprechenden Zeitintervall ineinander überführen lassen. Werden zur Ermittlung des optischen Flusses nur zwei Videobilder verwendet, unterscheiden sich die optischen Flüsse, die über eine Geschwindigkeit und über eine Verschiebung ermittelt werden nur durch einen Skalierungsfaktor, der im Wesentlichen durch die Dauer des Zeitintervalls gegeben ist. Der optische Fluss ist daher genauer durch einen zweidimensionalen Vektor in der zur Definition des optischen Flusses verwendeten Fläche angebbar, wobei jedoch im Folgenden der Einfachheit halber meist nur der Begriff "optischer Fluss" verwendet wird. Die Videobilder können grundsätzlich einen beliebigen zeitlichen Abstand aufweisen, doch ist bei Verwendung von nur zwei Videobildern der Abstand vorzugsweise nicht größer als der Zeitabstand, in dem tiefenaufgelöste Bilder erfasst werden.

Im Rahmen der Erfindung wird dabei darunter, dass Verarbeitungsschritte in aufeinanderfolgenden Zyklen durchgeführt werden, verstanden, dass die Zyklen zeitlich gegeneinander versetzt sind. Sie brauchen jedoch nicht unbedingt unmittelbar aufeinander zu folgen, obwohl dies bevorzugt ist.

Im Folgenden wird im Zusammenhang mit dem optischen Fluss bzw. einer aus dem optischen Fluss bestimmten Geschwindigkeit häufig von einer der Geschwindigkeit entsprechenden Verschiebungen gesprochen. Damit ist dann eine Verschiebung gemeint, die sich durch Multiplikation eines vorgegebenen Zeitintervalls mit der dem optischen Fluss entsprechenden Geschwindigkeit ergibt. Bei dem Zeitintervall kann es sich dabei insbesondere um den zeitlichen Abstand zwischen zwei Zyklen handeln.

Bei der zur Definition des optischen Flusses verwendeten Fläche kann zum einen eine Bildebene verwendet werden, in der die Videobildpunkte des dann ebenfalls in der Ebene definierten Videobildes liegen. Vorzugsweise wird jedoch eine Fläche verwendet, die im Rahmen eines Kameramodells zur Behandlung des Videobildes verwendet wird.

Erfindungsgemäß genügt es, wenn für wenigstens einen Entfernungsbildpunkt ein optischer Fluss ermittelbar ist. Im Allgemeinen kann nämlich der Fall auftreten, dass Entfernungsbildpunkte auf Gegenstandsflächen erfasst werden, die keine Intensitätsstruktur aufweisen und für die daher auch ein optischer Fluss nicht ermittelbar ist. Der optische Fluss ist beispielsweise dann vollständig ermittelbar, wenn der entsprechende Bereich des Videobildes in zwei linear von einander unabhängigen Richtungen eine Änderung der Intensität aufweist. Vorzugsweise wird das erfindungsgemäße Verfahren daher auf diese Bereiche angewendet.

Verfahren zur Berechnung des optischen Flusses sind grundsätzlich bekannt und beispielsweise in dem Artikel "The Computation of Optical Flow" von J. L. Barron und S. S. Beauchemin in ACM Computing Survey, Vol. 27, No. 3 Seiten 433-467 (1995) und in dem Artikel "Performance of Optical Flow Techniques" von J. L. Barron, D. J. Fleet, D. J. and S. S. Beauchemin in International Journal of Computer Vision, 12(1), Seiten 43-77 (1994) beschrieben, deren Inhalt hiermit durch Bezugnahme in die Beschreibung aufgenommen wird.

Der optische Fluss braucht dabei nicht unbedingt für das ganze Videobild berechnet zu werden. Es genügt vielmehr, diesen für den dem Entfernungsbildpunkt entsprechenden Gegenstandspunkt bzw. - soweit notwendig - dessen Umgebung zu ermitteln. Der Ort in der zur Definition des optischen Flusses verwendeten Fläche, für den der optische Fluss berechnet werden muss, ist aus den Lagekoordinaten des Entfernungsbildpunktes, der Relativlage des zur Erfassung der tiefenaufgelösten Bilder verwendeten Sensors zu dem zur Erfassung der Videobilder verwendeten Videosystem, der Abbildungsgeometrie des Videosystems bzw. einer Videokamera darin bzw. eines Modells für diese und der vorgegebenen Fläche auf der der optische Fluss ermittelt werden soll, ableitbar. Dabei kann als Ort ein entsprechender Videobildpunkt verwendet werden, es ist jedoch auch möglich, den optischen Fluss subpixelgenau an Orten zwischen Videobildpunkten bzw. Pixeln des Videobildes zu ermitteln. Weiterhin kann es genügen, dass der optische Fluss nur in der Nachbarschaft eines einem Entfernungsbildpunkt entsprechenden Ortes in dem Videobild ermittelbar ist, wenn der optische Fluss aufgrund von Stetigkeits- und/oder Glattheitseigenschaften eine Extrapolation oder Interpolation auf diesen Ort zulässt.

Bei dem Konzept des optischen Flusses wird davon ausgegangen, dass der optische Fluss die Verschiebung von Intensitätsverläufen und damit von Merkmalen in einem Videobild und somit von den Merkmalen entsprechenden Gegenstandsbereichen wiedergibt. Durch die Verwendung des optischen Flusses können daher für einen gegebenen Entfernungsbildpunkt zusätzlich Informationen in Bezug auf Geschwindigkeiten bzw. den Geschwindigkeiten entsprechende Verschiebungen des dem Entfernungsbildpunkt entsprechenden Gegenstandspunktes wenigstens näherungsweise erhalten werden.

Diese zusätzliche Information kann dazu verwendet werden, einem vorgegebenen Gegenstandspunkt entsprechenden Entfernungsbildpunkte über mehrere Zyklen zu ermitteln und so zu verfolgen. Dies erlaubt es, Entfernungsbildpunkte auch in Situationen mit mehreren Objekten bzw. Gegenständen mit größerer Sicherheit Objekten zuzuordnen, was die Objektverfolgung erleichtert. Dabei ist es nicht notwendig, dass ein optischer Fluss für alle Entfernungsbildpunkte ermittelbar ist.

Die aus dem optischen Fluss ermittelten Daten können zur Weiterverarbeitung gespeichert oder ausgegeben werden.

Zur Verarbeitung der Entfernungsbildpunkte ist bei der erfindungsgemäßen Vorrichtung die erste Einrichtung vorgesehen, die insbesondere einen entsprechend programmierten Prozessor, beispielsweise eine digitalen Signalprozessor (DSP), einen mit diesem verbundene Speicher sowie Schnittstellen zu dem Sensor für elektromagnetische Strahlung aufweisen kann.

Zur Ermittlung des optischen Flusses ist bei der erfindungsgemäßen Vorrichtung die zweite Einrichtung vorgesehen, die einen entsprechend programmierten Prozessor, beispielsweise einen digitalen Signalprozessor, sowie einen mit diesem verbundenen Speicher aufweisen kann.

Zur Zusammenführung der Daten sind die erste und die zweite Einrichtung miteinander verbunden.

Grundsätzlich können die erste und die zweite Einrichtung auch nur über einen gemeinsamen Prozessor verfügen, der dann entsprechend programmiert und über Schnittstellen mit dem Sensor zur Erfassung elektromagnetischer Strahlung und dem Videosystem verbunden sein kann.

Die erfindungsgemäße Vorrichtung erlaubt, da sie zur Durchführung des erfindungsgemäßen Verfahrens verwendbar ist, eine besonders gute Überwachung des Überwachungsbereichs.

Weiterbildungen und bevorzugte Ausführungsformen der Erfindung sind in den Ansprüchen, der Beschreibung und den Zeichnungen beschrieben.

Bevorzugt sind die Einrichtungen zur Ermittlung des optischen Flusses und zur Verarbeitung der tiefenaufgelösten Bilder zur Durchführung des erfindungsgemäßen Verfahrens ausgebildet.

Grundsätzlich können zur Erfassung der tiefenaufgelösten Bilder beliebige Sensoren zur Erfassung elektromagnetischer Strahlung verwendet werden. Es ist jedoch bei der erfindungsgemäßen Vorrichtung bevorzugt, dass der Sensor für elektromagnetische Strahlung einen Laserscanner umfasst. Dabei kann es sich besonders bevorzugt um einen Laserscanner handeln, mittels dessen ein gepulster Laserstrahl im Bereich optischer Frequenzen, insbesondere im infraroten oder sichtbaren Bereich, über einen Erfassungsbereich schwenkbar ist und von Gegenstandspunkten zurückgeworfene Strahlungspulse detektierbar und durch Messung der Laufzeit der Strahlungspulse Entfernungen der jeweiligen Gegenstandspunkte ermittelbar sind. Solche Sensoren zeichnen sich durch eine hohe Messgenauigkeit und Auflösung auf.

Nach einer anderen Ausführungsform ist es bevorzugt, dass der Sensor für elektromagnetische Strahlung einen, insbesondere Bild gebenden, Radarsensor umfasst. Bei diesem Radarsensor kann es sich insbesondere um einen Radarsensor handeln, mittels dessen ebenfalls über die Ermittlung der Laufzeit von Radarstrahlungspulsen, die von Gegenstandspunkten zurückgeworfen wurden, eine Entfernung von dem Radarsensor bzw. einem Bezugspunkt des Radarsensors ermittelbar ist. Zusätzlich ist hierbei eine Radialgeschwindigkeit eines Gegenstandspunktes relativ zu dem Sensor ermittelbar, die zur Ergänzung der aus dem optischen Fluss ermittelbaren Geschwindigkeit verwendet werden kann.

Bei dem erfindungsgemäßen Verfahren ist es bevorzugt, dass für den Entfernungsbildpunkt in Abhängigkeit von dem ermittelten optischen Fluss ein Schätzwert für eine Geschwindigkeit oder eine der Geschwindigkeit entsprechende Verschiebung des dem Entfernungsbildpunkt entsprechenden Gegenstandspunktes in einem vorgegebenen Zeitintervall ermittelt wird. Auf diese Weise werden Daten gewonnen, die sich unmittelbar als Eigenschaft des Entfernungsbildpunkts bzw. des zugehörigen Gegenstandspunkts verwenden lassen. Bei dem vorgegebenen Zeitintervall kann es sich insbesondere um den zeitlichen Abstand aufeinander folgender Zyklen handeln. Um eine möglichst weitgehende Information über die Geschwindigkeit bzw. Verschiebung zu erhalten, ist es bei der erfindungsgemäßen Vorrichtung bevorzugt, dass eine Videokamera des Videosystems von einer Abtastebene des Sensors für elektromagnetische Strahlung beabstandet angeordnet ist. Besonders bevorzugt ist dabei eine optische Achse der Videokamera in Blickrichtung der Videokamera auf die Abtastebene zu geneigt. Hierdurch kann ein endlicher Erfassungsbereich des Sensors für elektromagnetische Strahlung mit einem größeren Anteil des Erfassungsbereichs der Videokamera überdeckt werden. Besonders bevorzugt können dann bei dem erfindungsgemäßen Verfahren unter Verwendung der Abbildungsgeometrie der Videokamera bzw. eines entsprechenden Kameramodells Geschwindigkeiten oder Verschiebungen in drei Dimensionen geschätzt werden. Um die Genauigkeit der Schätzung zu erhöhen, ist es dabei bevorzugt, dass zur Ermittlung der Geschwindigkeit die durch den Entfernungsbildpunkt des aktuellen Zyklus gegebene Lage des entsprechenden Gegenstandspunktes verwendet wird.

Weiter ist es bei der erfindungsgemäßen Vorrichtung bevorzugt, dass die Videokamera direkt über dem Sensor für elektromagnetische Strahlung, insbesondere einem Laserscanner, angeordnet ist. Auf diese Weise erfassen beide Einrichtungen Bilder unter einem im Wesentlichen gleichen Blickwinkel, was die Weiterverarbeitung und insbesondere die Zusammenführung der Bilder erleichtert.

Weiterhin ist es bei dem Verfahren bevorzugt, dass wenigstens einem der Entfernungsbildpunkte eine von einem Sensor ermittelte Radialgeschwindigkeit zugeordnet ist, und dass für den Entfernungsbildpunkt unter Verwendung eines entsprechenden optischen Flusses eine transversale Geschwindigkeitskomponente und/oder eine entsprechende Verschiebung in einem vorgegebenen Zeitintervall ermittelt wird. Die Radialgeschwindigkeit kann dabei vorzugsweise mittels eines Radarsensors, besonders bevorzugt eines Bild gebenden Radarsensors, ermittelt worden sein. Das Zeitintervall kann insbesondere durch den zeitlichen Abstand aufeinander folgender Zyklen gegeben sein. Auf diese Weise ist die Geschwindigkeit eines erfassten Gegenstandspunktes umfassend zu ermitteln, ohne dass eine Objektverfolgung auf der Basis von Radialgeschwindigkeiten erforderlich ist. Insbesondere können die Radialgeschwindigkeiten mittels der oben erwähnten Vorrichtung erfasst werden. Für eine Geschwindigkeitsermittlung ist es dabei nur notwendig, den optischen Fluss aus mindestens zwei Videobildern zu berechnen, wobei jedoch nur eines dieser Videobilder mit der Erfassung des Sensorbildes, insbesondere Radarbildes, bzw. des tiefenaufgelösten Bildes synchronisiert zu sein braucht.

Um für einen Entfernungsbildpunkt den optischen Fluss zu ermitteln, muss dessen Lage in der zur Ermittlung des optischen Flusses verwendeten Fläche bekannt sein. Zur Ermittlung dieser Lage können grundsätzlich geeignete, aber sonst beliebige Kameramodelle für die Abbildung durch die Videokamera verwendet werden. Je nach verwendetem Videosystem, beispielsweise bei solchen mit Weitwinkelobjektiven oder Panoramakameras, können die Videobilder Verzerrungen aufweisen. Grundsätzlich kann ein Kameramodell die Entstehung solcher Verzerrungen, die beispielsweise durch große Blickwinkel eines Objektivs des verwendeten Videosystems bedingt sind, berücksichtigen. Es ist jedoch bevorzugt, dass die erfassten Videobilder vor der Ermittlung des optischen Flusses einer Rektifizierung und/oder Entzerrung unterworfen werden. Diese Rektifizierung und/oder Entzerrung kann insbesondere unmittelbar nach der Erfassung des Videobildes und vor einer Verwendung zur Ermittlung eines optischen Flusses erfolgen. Insbesondere kann hierzu ein entsprechender Prozessor in dem Videosystem vorgesehen sein, der speziell zu einer solchen Vorverarbeitung der Videodaten dient. Werden die Videobilder vor der Ermittlung des optischen Flusses einer Rektifizierung und/oder Entzerrung unterzogen oder ist eine solche nicht notwendig, ist es zur einfacheren Ermittlung in Echtzeit bevorzugt, dass ein einem Entfernungsbildpunkt entsprechender Punkt in einer zur Definition des optischen Flusses verwendeten Bildebene, für den der optische Fluss ermittelt wird, dadurch bestimmt wird, dass der Entfernungsbildpunkt entlang einer Geraden, die durch den Entfernungsbildpunkt und ein optisches Zentrum eines das Videobild erfassenden Videosystems verläuft, auf die zur Definition des optischen Flusses verwendete Bildebene projiziert wird. Die Lage des optischen Zentrums kann dabei durch Anpassung eines Lochkamera-Modells ("pinhole model") oder eines Mattscheibenmodells an eine in dem Videosystem verwendete Videokamera bestimmt werden. An dem so bestimmten Punkt kann dann der optische Fluss berechnet werden.

Ist die zur Erfassung der Videobilder verwendete Videokamera von der Abtastebene beabstandet angeordnet, werden Bewegungen in dem Videobild bzw. entsprechende Komponenten des optischen Flusses orthogonal zu der Abtastebene als Bewegungen in der Abtastebene interpretiert. Solche Bewegungen brauchen jedoch nicht unbedingt tatsächlichen Bewegungen von Gegenstandspunkten zu entsprechen. Es ist daher bevorzugt, dass eine Wank- und/oder Nickwinkelkompensation durchgeführt wird. Durch eine solche Kompensation können Wank- und/oder Nickbewegungen der Videokamera erkannt und ausgeglichen werden. Der Ausgleich kann grundsätzlich durch Kompensationsbewegungen der Videokamera erfolgen. Vorzugsweise wird die Kompensation jedoch im Rahmen der Verarbeitung der Videobilder durchgeführt. Grundlage der Kompensation können dabei Signale von Wank- und/oder Nickwinkelsensorsystemen an einem Fahrzeug, das die zur Erfassung der Bilder verwendete Vorrichtung trägt, oder auch Ergebnisse der Bildverarbeitung sein. Insbesondere bei Verwendung von Sensoren zur Erfassung von tiefenaufgelösten Bildern in mehreren Abtastebenen können auch Entfernungsbildpunkte in dem aktuellen oder einem vorhergehenden Zyklus verwendet werden. Weiterhin können Ergebnisse einer Objektverfolgung verwendet werden, in deren Rahmen das erfindungsgemäße Verfahren verwendet wird.

Die Erfindung kann insbesondere zur Überwachung eines Bereichs vor einem Fahrzeug verwendet werden. Bei erheblichen Wank- und insbesondere Nickbewegungen eines Fahrzeugs, das den Sensor für elektromagnetischen Strahlung zur Erfassung des tiefenaufgelösten Bildes trägt, ist es möglich, dass ein Gegenstandspunkt aufgrund der Wank- oder Nickbewegung nicht mehr erfassbar ist. Es ist daher bei dem erfindungsgemäßen Verfahren bevorzugt, dass die tiefenaufgelösten Bilder Entfernungsbildpunkte umfassen, die Gegenstandspunkten in mehreren Abtastebenen entsprechen. Bei der erfindungsgemäßen Vorrichtung ist es dementsprechend bevorzugt, dass der Sensor zur Erfassung elektromagnetischer Strahlung zur Abtastung mehrerer Abtastebenen ausgebildet ist. Die Abtastebenen sind dabei besonders bevorzugt fächerartig zueinander ausgerichtet. Auf diese Weise erstreckt sich der erste Erfassungsbereich auch in eine dritte Dimension, was gelegentlich bei einer geringen Anzahl von Abtastebenen auch als ein 2,5-dimensionaler oder quasi-dreidimensionaler Erfassungsbereich bezeichnet wird. Gegenstandspunkte, die ohne Wank- oder Nickbewegung in einer mittleren Abtastebene liegen, können so bei nicht zu großen Wank- oder Nickbewegungen in einer der anderen Abtastebenen erfasst werden.

Weiterhin kann vorzugsweise ein Ausgleich für eine Translation eines Gegenstands in einer Richtung orthogonal zu der Abtastebene, die sich ähnlich wie ein Nicken auswirkt, durchgeführt werden, um die Geschwindigkeitsberechnung zu verbessern.

Um die tiefenaufgelösten Bilder und die Videobilder gemeinsam erfindungsgemäß verarbeiten zu können, müssen diese jeweils einen zeitlichen Bezug zueinander aufweisen. Vorzugsweise wird wenigstens ein Videobild für einen aktuellen Zyklus zeitnah, besonders bevorzugt synchron, mit dem tiefenaufgelösten Bild erfasst. Synchrone Erfassung bedeutet dabei, dass sich die Zeitintervalle, während der das tiefenaufgelöste Bild bzw. das Videobild erfasst werden, wenigstens teilweise überlappen. Auf diese Weise sind auch sich schnell relativ zu den Sensoren bewegende Gegenstände verfolgbar.

Der optische Fluss in einem aktuellen Zyklus wird auf der Basis von wenigstens zwei Videobildern ermittelt. Dabei ist es bevorzugt, dass der optische Fluss für einen Zeitraum zwischen einem vorhergehenden Zyklus und dem aktuellen Zyklus ermittelt wird. Der vorhergehende Zyklus braucht hierbei, wie auch in der gesamten Anmeldung, nicht unbedingt der unmittelbar vorhergehende Zyklus zu sein, wenn dies nicht ausdrücklich beschrieben ist, jedoch ist dies bevorzugt der Fall, da eine bei der Berechnung des optischen Flusses für einen Zyklus ermittelte Verschiebung einer entsprechenden Verschiebung von Entfernungsbildpunkten bzw. Lagekoordinaten der Entfernungsbildpunkte entspricht.

Um die Aussagekraft der auf der Basis des optischen Flusses ermittelten Daten zu ermitteln, ist es bevorzugt, dass die Videobilder mit einer höheren Frequenz erfasst werden als die tiefenaufgelösten Bilder. Bei der erfindungsgemäßen Vorrichtung ist es dazu bevorzugt, dass die Videokamera und der Sensor für elektromagnetische Strahlung so ausgebildet sind, dass Videobilder mit einer höheren Frequenz erfassbar sind als die tiefenaufgelösten Bilder. Vorzugsweise ist die Erfassungsfrequenz der Videobilder ein ganzzahliges Vielfaches der Erfassungsfrequenz der tiefenaufgelösten Bilder. Durch die Auswertung der Videobilder in kürzeren Zeitabständen wird die Berechnung des optischen Flusses insbesondere bei schnellen Bewegungen von Gegenständen stark vereinfacht, da sich Intensitätsverläufe in den Videobildern nur um kürzere Strecken verschieben und so leichter einander zugeordnet werden können. Durch Addition von optischen Flüssen kann dann eine Geschwindigkeit oder eine der Geschwindigkeit entsprechende Verschiebung in einem Zyklus des Verfahrens oder zwischen zwei aufeinander folgenden tiefenaufgelösten Bildern ermittelt werden.

Der optische Fluss kann grundsätzlich mit beliebigen geeigneten Verfahren berechnet werden, insbesondere mit den in den oben genannten Übersichtsartikeln genannten Verfahren. Es dabei bevorzugt, dass der optische Fluss unter Verwendung eines differentiellen Verfahrens bestimmt wird. Bei solchen Verfahren werden räumliche und zeitliche Ableitungen der Intensitäten in den verwendeten Videobildern näherungsweise berechnet und zur Ermittlung des optischen Flusses herangezogen. Solche Verfahren erlauben die Ermittlung des optischen Flusses mit einer räumlichen Auflösung, die größer ist als die durch den Pixel- bzw. Videobildpunktabstand gegebene, und damit eine subpixelgenaue Berechnung des optischen Flusses. Diese Ausführungsform des erfindungsgemäßen Verfahrens eignet sich insbesondere für Videobilder mit einer geringen räumlichen Auflösung, wie sie beispielsweise bei Verwendung einer Weitwinkeloder Panoramakamera auftreten kann.

Weiterhin ist es bevorzugt, dass der optische Fluss unter Verwendung eines Korrelationsverfahrens ermittelt wird. Bei diesen Verfahren werden Verschiebungen von Merkmalen durch Berechnung von Korrelationen zwischen aufeinander folgenden Videobildern ermittelt. Solche Verfahren eignen sich insbesondere auch für Situationen, in denen sich Gegenstände in dem Videobild schnell bewegen und damit große optische Flüsse auftreten. Weiterhin erlauben sie eine schnelle Berechnung des optischen Flusses, wobei gleichzeitig über die Güte der Korrelation, beispielsweise einer normierten Kreuzkorrelation, auch eine Güte des berechneten Wertes des optischen Flusses erhalten werden kann. An Hand der Güte kann dann entschieden werden, ob der ermittelte optische Fluss zur weiteren Verarbeitung verwendet werden kann bzw. soll.

Weiterhin ist es bevorzugt, dass zur Ermittlung des optischen Flusses ein hierarchisches Verfahren verwendet wird. Dabei wird der optische Fluss zunächst auf einer groben räumlichen Skala bzw. Entfernungsskala mit vergröberten Videobildern ermittelt und das Ergebnis zur Berechnung auf einer feineren Skala auf der Basis von Versionen der Videobilder mit einer höheren Auflösung verwendet. Dieser Wechsel der Skalen kann rekursiv und/oder iterativ erfolgen. Durch ein solches Verfahren, insbesondere im Zusammenhang mit differentiellen Verfahren zur Ermittlung des optischen Flusses, können sowohl große optische Flüsse ermittelt als auch die Fehler bei der Bestimmung des optischen Flusses reduziert werden. Zu diesen an sich dem Fachmann bekannten Verfahren wird beispielsweise auf die oben genannte Veröffentlichung von Barron, Fleet und Beauchemin verwiesen.

Es ist besonders bevorzugt, dass der optische Fluss unter Verwendung eines Korrelationsverfahrens auf einer räumlich groben Skala und eines differentiellen Verfahrens auf einer feineren Skala ermittelt wird. Da Korrelationsverfahren auch und gerade bei großen optischen Flüssen gut arbeiten, während differentielle Verfahren auf einer feinen Skala gut arbeiten, kann so eine besonders effiziente Ermittlung des optischen Flusses erfolgen.

Erfasste Entfernungsbildpunkte können, wenn eine Objektverfolgung durchgeführt werden soll, zu Segmenten zusammengefasst bzw. diesen zugeordnet werden. Erfolgt die Segmentierung nur über Segmentierungskriterien, die den Abstand von Entfernungsbildpunkten voneinander betreffen, können in Situationen, in denen Gegenstände nahe zueinander angeordnet sind, Probleme bei der Segmentierung auftreten. Es ist daher bevorzugt, dass für jeden erfassten Entfernungsbildpunkt der optische Fluss ermittelt wird, und dass der ermittelte optische Fluss zur Segmentierung des tiefenaufgelösten Bildes verwendet wird. Insbesondere kann als zusätzliches Segmentierungskriterium zu dem Segmentierungskriterium in Bezug auf Abstände in der Abtastebene verwendet werden, dass sich die Werte für den optischen Fluss für Entfernungsbildpunkte eines Segments nicht zu stark, zum Beispiel weniger als ein vorgegebener Grenzwert unterscheiden dürfen. Es wird so eine wesentlich größere Trennschärfe bei der Segmentierung erzielt, die die Segmentierung, eine Segment-Objekt-Zuordnung und damit auch eine Objektverfolgung wesentlich verbessern kann.

Alternativ ist es bevorzugt, dass für jeden erfassten Entfernungsbildpunkt eine Geschwindigkeit oder eine der Geschwindigkeit entsprechende Verschiebung in Abhängigkeit von dem entsprechenden optischen Fluss ermittelt wird, und dass die ermittelten Geschwindigkeiten oder die den Geschwindigkeiten entsprechenden Verschiebungen zur Segmentierung des tiefenaufgelösten Bildes verwendet werden. Neben einer verbesserten Segmentierung kann so Segmenten auch direkt eine Geschwindigkeit oder entsprechende Verschiebung zugeordnet werden, die sich beispielsweise aus Mittelwerten der Geschwindigkeiten der dem Segment zugeordneten Entfernungsbildpunkte ergibt.

Bei dem erfindungsgemäßen Verfahren werden für wenigstens einen Entfernungsbildpunkt in einem aktuellen Zyklus in Abhängigkeit von dem entsprechenden optischen Fluss Daten in Bezug auf die Lage eines dem Entfernungsbildpunkt in dem aktuellen Zyklus entsprechenden Gegenstandspunktes in einem späteren Zyklus prädiziert . Der spätere Zyklus braucht dabei dem aktuellen Zyklus nicht unmittelbar zu folgen, jedoch ist dies bevorzugt der Fall. Im Gegensatz zu bekannten Objektverfolgungsverfahren auf der Basis von tiefenaufgelösten Bildern, bei denen nur Objekte als Ganze verfolgt werden, kann bei dem erfindungsgemäßen Verfahren durch die Verwendung des optischen Flusses und der entsprechenden Geschwindigkeit eines einem Entfernungsbildpunkt zugeordneten Gegenstandspunktes die Lage des Gegenstandspunkts unabhängig von einem Objektverfolgungsverfahren nur auf der Basis von wenigstens zwei Videobildern, mittels derer der optische Fluss ermittelbar ist, in einem späteren Zyklus prädiziert werden. Dies kann eine Objektverfolgung wesentlich vereinfachen.

Bei einer ersten Alternative dieser Weiterbildung des erfindungsgemäßen Verfahrens ist es dazu bevorzugt, dass für den wenigstens einen Entfernungsbildpunkt in dem aktuellen Zyklus in Abhängigkeit von dem entsprechenden optischen Fluss eine Geschwindigkeit oder eine der Geschwindigkeit entsprechende Verschiebung während eines Zeitraums zwischen dem aktuellen und dem späteren Zyklus ermittelt wird, und dass aus dieser Geschwindigkeit oder einer der Geschwindigkeit entsprechenden Verschiebung Lagekoordinaten eines dem Gegenstandspunkt in dem folgenden Zyklus entsprechenden Entfernungsbildpunktes prädiziert werden. Eine solche Prädiktion in der Abtastebene erlaubt einen einfachen, unmittelbaren Vergleich mit den Lagen von Entfernungsbildpunkten in einem späteren Zyklus.

Die Ermittlung der Lagekoordinaten kann dabei unter Verwendung desjenigen Kameramodells erfolgen, mittels dessen auch Lagen auf der zur Berechnung des optischen Flusses verwendeten Fläche mit Lagekoordinaten der Entfernungsbildpunkte verknüpfbar sind. Zur Erzielung einer hohen Ausführungsgeschwindigkeit ist es dabei besonders bevorzugt, dass die Lage des Entfernungsbildpunkts durch Bestimmung des Schnittpunkts einer durch ein optisches Zentrum eines zur Erfassung des Videobildes verwendeten Videosystems und das Ende eines in einer Bildebene, in der der optische Fluss definiert ist, liegenden optischen Flussvektors definierten Geraden mit der Abtastebene ermittelt wird. Dabei wird implizit von einem Lochkamera- oder Mattscheiben-Modell ausgegangen.

Alternativ ist es bevorzugt, dass für den wenigstens einen Entfernungsbildpunkt in dem aktuellen Zyklus in einer Fläche, in der der optische Fluss ermittelt wird, eine Lage eines Punktes in einem späteren Zyklus prädiziert wird, der dem dem Entfernungsbildpunkt in dem aktuellen Zyklus entsprechenden Gegenstandspunkt in dem späteren Zyklus entspricht. Hier erfolgt die Prädiktion also nicht in der Abtastebene, sondern in der Fläche, insbesondere einer Bildebene, in der der optische Fluss ermittelt wird. Dies kann die Weiterverarbeitung im Rahmen einer Objektverfolgung beschleunigen.

Weiterhin ist es bevorzugt, dass wenigstens einem erfassten Entfernungsbildpunkt in einem vorhergehenden Zyklus unter Verwendung des entsprechenden optischen Flusses und wenigstens eines Zuordnungskriteriums wenigstens ein Entfernungsbildpunkt in dem aktuellen Zyklus zugeordnet wird, der dem im Wesentlichen gleichen Gegenstandspunkt entspricht wie der Entfernungsbildpunkt in dem vorhergehenden Zyklus. Wie zuvor erwähnt braucht der vorhergehende Zyklus dem aktuellen Zyklus nicht unbedingt unmittelbar vorherzugehen, doch ist dies vorzugsweise der Fall. Diese Weiterbildung des erfindungsgemäßen Verfahrens ermöglicht also die Verfolgung eines dem Entfernungsbildpunkt entsprechenden Gegenstandsbereichs in der Folge der tiefenaufgelösten Bilder. Dabei können einem Entfernungsbildpunkt in einem aktuellen Zyklus auch gegebenenfalls mehrere Entfernungsbildpunkte in einem folgenden Zyklus zugeordnet werden. Dies kann insbesondere dann auftreten, wenn der Sensor für elektromagnetische Strahlung, insbesondere ein Laserscanner, ein mit zunehmendem Abstand abnehmenden Auflösungsvermögens aufweist. Bewegt sich beispielsweise ein Gegenstand der erfindungsgemäßen Vorrichtung mit einem solchen Sensor erfasst der Sensor für elektromagnetische Strahlung dann auf der von ihm sichtbaren Fläche des Gegenstands zunehmend mehr Entfernungsbildpunkte. Umgekehrt kann auch mehreren Entfernungsbildpunkten in dem aktuellen Zyklus nur ein Entfernungsbildpunkt in dem folgenden Zyklus zugeordnet werden, beispielsweise wenn sich ein Gegenstand von der erfindungsgemäßen Vorrichtung entfernt und aufgrund eines mit zunehmenden Abstand abnehmenden Auflösungsvermögens des Sensors für elektromagnetische Strahlung, insbesondere eines Laserscanners, auf der gleichen für den Sensor sichtbaren Fläche weniger verschiedene Gegenstandsbereiche aufgelöst und entsprechende Entfernungsbildpunkte erfasst werden. Die Entfernungsbildpunkte brauchen daher nur dem im Wesentlichen gleichen bzw. selben Gegenstandspunkt zu entsprechen. Bedingt durch die erwähnten Änderungen der Ansicht oder ähnlicher, beispielsweise durch Drehungen des Gegenstands relativ zum dem Videosystem verursachte Änderungen können zwei Gegenstandspunkte in aufeinander folgenden Zyklen, die einander zugeordnete Entfernungsbildpunkten in den aufeinander folgenden Zyklen entsprechen und die im Sinne der Erfindung als der im Wesentlichen gleiche bzw. selbe Gegenstandspunkt bzw. -bereiche anzusehen sind, etwas gegeneinander verschoben, gedreht, vergrößert oder verkleinert sein. Die Verfolgung braucht dabei für einige Anwendungen nur über wenige Zyklen zu erfolgen.

Dabei ist es besonders bevorzugt, dass tiefenaufgelöste Bilder mit Entfernungsbildpunkten verwendet werden, die Gegenstandspunkten in mehreren Abtastebenen entsprechen, und dass nur Entfernungsbildpunkte gleicher Abtastebenen einander zugeordnet werden. Dieses Vorgehen ermöglicht eine besonders schnelle Zuordnung und eignet sich insbesondere für Situationen, in denen Wank- oder Nickbewegungen des Sensors oder der Videokamera vernachlässigbar sind. Die Abtastebenen sind dabei, wie oben bereits ausgeführt, vorzugsweise fächerartig angeordnet.

Treten jedoch Nick- oder Wankbewegungen auf, ist es bevorzugt, dass tiefenaufgelöste Bilder mit Entfernungsbildpunkten verwendet werden, die Gegenstandspunkten in mehreren Abtastebenen entsprechen, und dass bei der Zuordnung für einen Entfernungsbildpunkt in einer Abtastebene in dem aktuellen Zyklus das Zuordnungskriterium für Entfernungsbildpunkte in allen Abtastebenen geprüft wird. Hierdurch wird eine Zuordnung auch bei Wank- und Nickbewegungen ermöglicht.

Die Zuordnung kann je nach Art des Zuordnungskriteriums unterschiedlich erfolgen. Nach einer ersten Alternative ist es bevorzugt, dass aus dem optischen Fluss für den dem Gegenstandspunkt entsprechenden Entfernungsbildpunkt in dem vorhergehenden Zyklus Lagekoordinaten eines Entfernungsbildpunktes in dem aktuellen Zyklus prädiziert werden, der demselben Gegenstandspunkt entspricht, und dass das Zuordnungskriterium einen Unterschied zwischen den prädizierten Lagekoordinaten und den Lagekoordinaten des Entfernungsbildpunktes in dem aktuellen Zyklus betrifft. Insbesondere kann beispielsweise das Zuordnungskriterium darin bestehen, dass ein Abstand zwischen den prädizierten und den erfassten Lagekoordinaten kleiner als ein vorgegebener Grenzwert ist. Die Zuordnung erfolgt hier also in der Abtastebene bzw. den Abtastebenen. Dies vereinfacht die Festlegung des Grenzwerts, da in diesen nicht notwendigerweise Parameter des Videosystems einzugehen brauchen.

Nach einer zweiten Alternative ist es bevorzugt, dass aus dem optischen Fluss für den dem Gegenstandspunkt entsprechenden Entfernungsbildpunkt in dem vorhergehenden Zyklus unter Verwendung der Abbildungsgeometrie eines zur Erfassung des Videobildes verwendeten Videosystems eine Kurve ermittelt wird, auf der prädizierte Lagekoordinaten für den Gegenstandspunkt in dem aktuellen Zyklus liegen, und dass das Zuordnungskriterium einen Abstand eines Entfernungsbildpunktes des aktuellen Zyklus von der Kurve oder einen Abstand eines Entfernungsbildpunkts des aktuellen Zyklus von der Kurve in der Abtastebene, in der der Entfernungsbildpunkt liegt, betrifft. Die Kurve ist dabei durch die Anbaulage des Videosystems und die Ausrichtung einer optischen Achse des Videosystems gegenüber einem fest mit dem Videosystem verbundenen Koordinatensystem, bei Verwendung an einem Fahrzeug beispielsweise mit dem Fahrzeugkoordinatensystem, und gegebenenfalls weiteren Parametern bestimmt. Auf diese Weise können Zuordnungsungenauigkeiten, die durch Wank- und insbesondere auch Nickbewegungen bedingt sind, vermieden werden. Diese Alternative erlaubt eine gute Zuordnung auch bei dem Auftreten von Nick- oder Wankbewegungen und insbesondere der Verwendung von tiefenaufgelösten Bildern mit nur einer Abtastebene. Zum Ausgleich von Nickbewegungen wird besonders bevorzugt als Kurve eine Gerade verwendet. Die Zuordnung ist dann besonders zuverlässig bei näherungsweise orthogonal zu der Abtastebene orientierten Gegenstandsflächen.

Nach einer dritten Alternative ist es bevorzugt, dass der Entfernungsbildpunkt in dem vorhergehenden und wenigstens einige der Entfernungsbildpunkte in dem aktuellen Zyklus in eine zur Definition des optischen Flusses verwendete Fläche projiziert werden, dass unter Verwendung des optischen Flusses aus dem projizierten Entfernungsbildpunkt des vorhergehenden Zyklus eine auf die Fläche projizierte prädizierte Lage des dem Entfernungsbildpunkt zugeordneten Gegenstandspunktes ermittelt wird, und dass das Zuordnungskriterium einen Unterschied zwischen der prädizierten Lage und jeweils den Lagen der projizierten Entfernungsbildpunkte des aktuellen Zyklus betrifft. Unter der Projektion wird in diesem Zusammenhang allgemein die Abbildung mittels eines auch sonst in dem erfindungsgemäßen Verfahren verwendeten Kameramodells verstanden, wobei bei dem einfachen Lochkamera- oder Mattscheiben-Modell im Wesentlichen nur eine Projektion in Richtung auf ein optisches Zentrum der Videokamera durchgeführt wird. Die Zuordnung erfolgt hier also in der zur Definition des optischen Flusses verwendeten Fläche und nicht in der Abtastebene. Auf diese Weise kann eine Rücktransformation in die Abtastebene vermieden werden. Dadurch ist insgesamt in jedem Zyklus eine Projektion weniger auszuführen, da die Entfernungsbildpunkte zur Bestimmung des optischen Flusses ohnehin in die Fläche zur Definition des optischen Flusses projiziert werden müssen.

Ähnlich wie bei der zweiten Alternative ist es gemäß einer vierten Alternative bevorzugt, dass der Entfernungsbildpunkt in dem vorhergehenden und wenigstens einige der Entfernungsbildpunkte in dem aktuellen Zyklus in eine zur Definition des optischen Flusses verwendete Fläche projiziert werden, dass unter Verwendung des optischen Flusses aus dem projizierten Entfernungsbildpunkt des vorhergehenden Zyklus auf der Fläche eine Kurve mit auf die Fläche projizierten, prädizierten Lagen des dem Entfernungsbildpunkt zugeordneten Gegenstandspunktes ermittelt wird, und dass das Zuordnungskriterium einen Unterschied zwischen der Kurve und jeweils den Lagen der projizierten Entfernungsbildpunkte des aktuellen Zyklus betrifft. Die Kurve ist dabei durch die Anbaulage des Videosystems und die Ausrichtung einer optischen Achse des Videosystems gegenüber einem fest mit dem Videosystem verbundenen Koordinatensystem, bei Verwendung an einem Fahrzeug beispielsweise mit dem Fahrzeugkoordinatensystem, und gegebenenfalls weiteren Parametern bestimmt. Auf diese Weise können Zuordnungsungenauigkeiten, die durch Wank- und insbesondere auch Nickbewegungen bedingt sind, vermieden werden. Zur Kompensation von Nickbewegungen ist es insbesondere bevorzugt, dass die Entfernungsbildpunkte in einer Abtastebene liegenden Gegenstandspunkten entsprechen, und dass der Unterschied durch einen Abstand der prädizierten Lage von der Lage eines in die zur Definition des optischen Flusses verwendete Fläche projizierten Entfernungsbildpunktes in Richtung einer zu der Abtastebene orthogonalen Geraden in der Fläche gegeben ist, die durch den in die Fläche projizierten Entfernungsbildpunkt verläuft. Bei Verwendung eines Lochkamera- oder Mattscheibenmodells ist insbesondere die Lage der Geraden durch den Schnittpunkt einer Projektionsgeraden durch das optische Zentrum und den Entfernungsbildpunkt mit der Bildebene definiert. Diese vierte Alternative vereint die Vorzüge der zweiten und dritten Alternative.

Die Zuordnung von den dem im Wesentlichen gleichen Gegenstandspunkt entsprechenden Entfernungsbildpunkten in aufeinander folgenden Zyklen kann auf unterschiedliche Weise weiterverwendet werden.

Es ist bevorzugt, dass aus den Lagen zweier einander zugeordneter Entfernungsbildpunkte in aufeinanderfolgenden Zyklen, die einem im Wesentlichen gleichen Gegenstandspunkt entsprechen, eine Geschwindigkeit des Gegenstandspunktes ermittelt wird. Bei Verwendung nur einer Abtastebene wird die Geschwindigkeit in der Abtastebene ermittelt. Aufgrund der hohen Genauigkeit der Lagedaten der Entfernungsbildpunkte, insbesondere bei Erfassung mit einem Laserscanner, kann so für einen Gegenstandspunkt eine sehr genaue Geschwindigkeit ermittelt werden, die beispielsweise zur Segmentierung oder Berechnung von Segmenteigenschaften genutzt werden kann.

Häufig werden die Lagen der Entfernungsbildpunkte in dem aktuellen Zyklus in der Abtastebene oder -projiziert - in der zur Berechnung es optischen Flusses verwendeten Fläche nicht genau mit den prädizierten Lagen übereinstimmen. Insbesondere kann der Fall auftreten, dass dem Entfernungsbildpunkt des vorhergehenden Zyklus bzw. dem entsprechenden Gegenstandspunkt zwei Entfernungsbildpunkte des aktuellen Zyklus zugeordnet werden können. Es ist dann bevorzugt, dass in dem Fall, dass einem Entfernungsbildpunkt aus einem vorhergehenden Zyklus zwei Entfernungsbildpunkte in dem aktuellen Zyklus zugeordnet werden, eine Geschwindigkeit eines dem Entfernungsbildpunkt in dem vorhergehenden Zyklus entsprechenden Gegenstandspunktes auf der Basis des Schnittpunkts der Kurve mit einer die zugeordneten Entfernungsbildpunkte bzw. zugeordneten projizierten Entfernungsbildpunkte verbindenden Geraden bestimmt wird. Dabei wird davon ausgegangen, dass der Schnittpunkt eine - gewissermaßen durch Interpolation erhaltene - genauere Lage des Gegenstandspunkts wiedergibt, als die beiden Entfernungsbildpunkte. Sind mehr als zwei Entfernungsbildpunkte zugeordnet, werden nur die beiden Entfernungsbildpunkte verwendet, die der Kurve am nächsten sind.

Bei einer Weiterbildung des Verfahrens ist es bevorzugt, dass das Verfahren Schritte für eine Verfolgung von Objekten umfasst, die Gegenständen in dem gemeinsamen Erfassungsbereich entsprechen, dass die tiefenaufgelösten Bilder segmentiert werden, dass wenigstens einem Entfernungsbildpunkt eines vorhergehenden Zyklus ein Entfernungsbildpunkt eines aktuellen Zyklus zugeordnet wird, und dass die Zuordnung der Entfernungsbildpunkte zur Zuordnung von Segmenten zu Objekten in dem aktuellen Zyklus verwendet wird. Mittels des erfindungsgemäßen Verfahrens kann die Bewegung von Gegenstandspunkten mit Hilfe der Prädiktion der Lage und der Zuordnung von Entfernungsbildpunkten verfolgt werden. Diese Verfolgung ermöglicht es, ein Segment einem Gegenstandspunkt zuzuordnen und es so gewissermaßen zu individualisieren. Damit ist das Segment aber auch immer dem gleichen Objekt zuzuordnen, dem der entsprechende Gegenstandspunkt entsprechen muss. Vorzugsweise erfolgt daher in dem erfindungsgemäßen Verfahren eine entsprechende Zuordnung. Insgesamt kann so die Objektverfolgung besonders in Situationen mit mehreren nahe benachbarten, erfassten Gegenständen verbessert werden.

Dazu ist es besonders bevorzugt, dass ein Segment in dem vorhergehenden Zyklus, dem der Entfernungsbildpunkt des vorhergehenden Zyklus zugeordnet ist, einem Segment in dem aktuellen Zyklus zugeordnet wird, dem der Entfernungsbildpunkt in dem aktuellen Zyklus zugeordnet ist. Es ergibt sich so eine Verfolgung einzelner Segmente, wozu allerdings nur ein Entfernungsbildpunkt bzw. ein diesem zugeordneter Gegenstandspunkt notwendig ist. Insbesondere kann so eine fälschliche Zuordnung von zwei eigentlich verschiedenen Objekten zuzuordnenden Segmenten zu einem Objekt vermieden werden.

Weiterhin ist es dann besonders bevorzugt, dass für wenigstens ein Segment eine Segmenteigenschaft über dessen Lage und Geometrie hinaus ermittelt wird, und dass die Segmenteigenschaft zur Segment-Objekt-Zuordnung verwendet wird. Sind die Segmente einzeln verfolgbar, kann ihnen eine Segmenteigenschaft zugeordnet werden, die zur Segment-Objekt-Zuordnung verwendbar ist. Insbesondere kann so eine Auflösung eines scheinbaren einheitlichen Objekts in nahe benachbarte Objekte erfolgen. Darüber hinaus können einem Objekt auf der Basis der Eigenschaften der ihm zugeordneten Segmente Eigenschaften zugeordnet werden, die sonst nur über die Objektverfolgung bestimmbar sind, beispielsweise eine Translationsgeschwindigkeit oder eine Dreh- bzw. Giergeschwindigkeit.

Es ist dabei besonders bevorzugt, dass für wenigstens ein Segment als Segmenteigenschaft eine räumliche Inhomogenität des optischen Flusses der dem Segment zugeordneten Entfernungsbildpunkte oder in Umgebungen derselben ermittelt wird. Auf diese Weise kann eine Klassifizierung bzw. Wiedererkennung von Objekten unterstützt werden, da beispielsweise Objekte mit sich bewegenden Bereichen, zum Beispiel Fußgänger, eine größere Inhomogenität des optischen Flusses aufweisen als beispielsweise eine Wand oder ein Lastkraftwagen mit großen Seitenflächen. Insbesondere können so nur aufgrund eines Abstandskriteriums nicht unterscheidbare Gegenstände, im Beispiel ein Fußgänger vor einer Wand, unterschieden werden.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Gegenstand der Erfindung ist auch ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Die Erfindung ist bevorzugt zur Überwachung eines Überwachungsbereichs vor, neben oder hinter einem Fahrzeug einsetzbar, wobei eine erfindungsgemäße Vorrichtung fest mit dem Fahrzeug verbunden sein kann.

Erfindungsgemäß kann auch umgekehrt für einen durch den optischen Fluss bestimmten Videobildpunkt ein Entfernungsbildpunkt ermittelt werden, mittels dessen eine dem Videobildpunkt entsprechende Merkmalsverfolgung in dem Videobild unterstützt wird.

Die Erfindung wird nun weiter beispielhaft anhand der Zeichnungen erläutert. Es zeigen:
- Fig. 1: eine schematische Draufsicht auf ein Fahrzeug mit einer Vorrichtung zur Überwachung eines Überwachungsbereichs nach einer ersten bevorzugten Ausführungsform der Erfindung und einem vor dem Fahrzeug befindlichen Gegenstand,
- Fig. 2: eine teilweise schematische Seitenansicht des Fahrzeugs und des Gegenstands in Fig. 1,
- Fig. 3: ein Ablaufdiagramm, in dem schematisch der Ablauf eines Verfahrens nach einer ersten bevorzugten Ausführungsform der Erfindung veranschaulicht ist,
- Fig. 4: eine schematische perspektivische Darstellung einer Abtastebene mit einem Entfernungsbildpunkt, der Abbildungsgeometrie zur Berechnung des optischen Flusses sowie bei Ablauf des Verfahrens in Fig. 3 auftretende Lagen von erfassten und prädizierten Entfernungsbildpunkten sowie von Videobildpunkten und einem einem optischen Fluss entsprechenden Verschiebungsvektor,
- Fig. 5: ein schematisches Videobild einer Szene mit einem Kraftfahrzeug und mehreren anderen Gegenständen, in das Entfernungsbildpunkte und entsprechende optische Flussvektoren eingetragen sind,
- Fig. 6: ein Ablaufdiagramm, in dem schematisch der Ablauf eines Verfahrens nach einer zweiten bevorzugten Ausführungsform der Erfindung veranschaulicht ist,
- Fig. 7: eine schematische perspektivische Darstellung einer Abtastebene mit einem Entfernungsbildpunkt, der Abbildungsgeometrie zur Berechnung des optischen Flusses sowie bei Ablauf des Verfahrens in Fig. 6 auftretende Lagen von erfassten und prädizierten Entfernungsbildpunkten sowie von Videobildpunkten und einem einem optischen Fluss entsprechenden Verschiebungsvektor,
- Fig. 8: ein Ablaufdiagramm, in dem schematisch der Ablauf eines Verfahrens nach einer dritten bevorzugten Ausführungsform der Erfindung veranschaulicht ist,
- Fig. 9: eine schematische perspektivische Darstellung einer Abtastebene mit einem Entfernungsbildpunkt, der Abbildungsgeometrie zur Berechnung des optischen Flusses sowie bei Ablauf des Verfahrens in Fig. 8 auftretende Lagen von erfassten und prädizierten Entfernungsbildpunkten sowie von Videobildpunkten und einem einem optischen Fluss entsprechenden Verschiebungsvektor,
- Fig. 10: ein Ablaufdiagramm, in dem schematisch der Ablauf eines Verfahrens nach einer sechsten bevorzugten Ausführungsform der Erfindung veranschaulicht ist,
- Fig. 11: eine schematische perspektivische Darstellung einer Abtastebene mit einem Entfernungsbildpunkt, der Abbildungsgeometrie zur Berechnung des optischen Flusses sowie bei Ablauf des Verfahrens in Fig. 10 auftretende Lagen von erfassten und prädizierten Entfernungsbildpunkten sowie von Videobildpunkten und einem einem optischen Fluss entsprechenden Verschiebungsvektor,
- Fig. 12: eine teilweise schematische Seitenansicht des Fahrzeugs und des Gegenstands in Fig. 1, jedoch mit einer Vorrichtung zur Überwachung eines Überwachungsbereichs nach einer siebten bevorzugten Ausführungsform der Erfindung,
- Fig. 13: eine schematische perspektivische Darstellung einer Abtastebene mit einem Entfernungsbildpunkt, der Abbildungsgeometrie zur Berechnung des optischen Flusses sowie bei Ablauf eines Verfahrens nach einer siebten bevorzugten Ausführungsform der Erfindung auftretende Lagen von erfassten und prädizierten Entfernungsbildpunkten sowie von Videobildpunkten und einem einem optischen Fluss entsprechenden Verschiebungsvektor,
- Fig. 14: eine schematische Draufsicht auf eine Abtastebene mit einem Entfernungsbildpunkt, einem Bezugspunkt eines Radarsensors, der Abbildungsgeometrie zur Berechnung des optischen Flusses sowie bei Ablauf eines Verfahrens nach einer neunten bevorzugten Ausführungsform der Erfindung auftretende Lagen von erfassten und prädizierten Entfernungsbildpunkten sowie von Videobildpunkten und einem einem optischen Fluss entsprechenden Verschiebungsvektor,
- Fig. 15: einen schematischen Ausschnitt eines tiefenaufgelösten Bildes mit einem Bus und zwei Personenkraftwagen, und
- Fig. 16a,b,c: drei schematische Ausschnitte aus drei entsprechenden tiefenaufgelösten Bildern mit zwei Fahrzeugen und entsprechenden Objekten, und zwar vor dem Ausparken eines der Fahrzeuge, beim Ausparken des Fahrzeugs bei Verwendung eines bekannten Objektverfolgungsverfahrens und beim Ausparken des Fahrzeugs bei Verwendung eines erfindungsgemäßen Verfahrens.

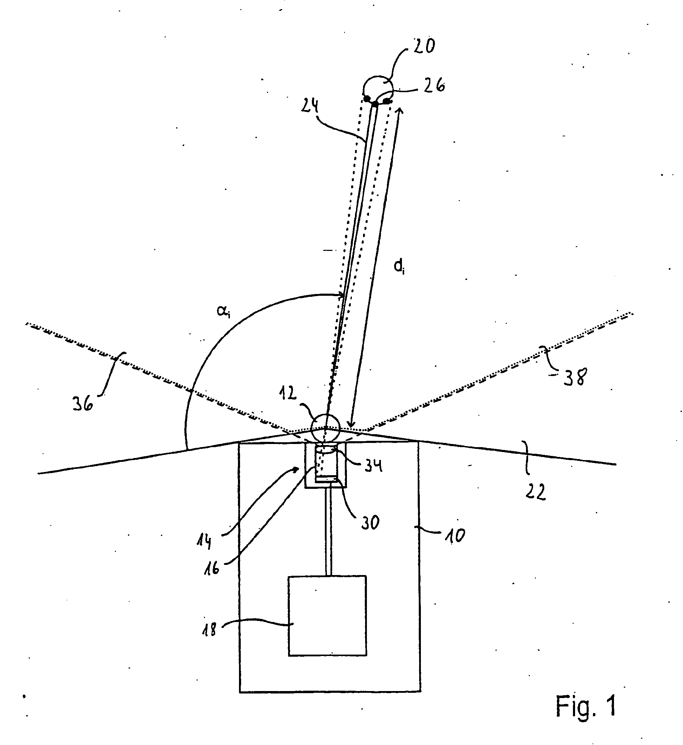

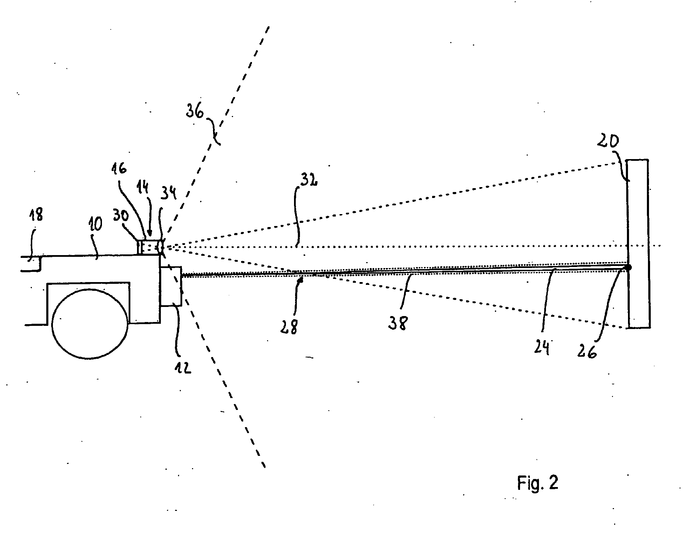

In den Fig. 1 und 2 trägt ein Fahrzeug 10 zur Überwachung des Bereichs vor dem Fahrzeug 10 an seiner Frontseite einen Laserscanner 12 und ein Videosystem 14 mit einer monokularen Videokamera 16. In dem Fahrzeug befindet sich weiterhin eine mit dem Laserscanner 12 und dem Videosystem 14 verbundene Datenverarbeitungseinrichtung 18. Der Laserscanner 12, das Videosystem 14 und die Datenverarbeitungseinrichtung 18 bilden eine Vorrichtung zur Überwachung eines Überwachungsbereichs nach einer ersten bevorzugten Ausführungsform der Erfindung. In Fahrtrichtung vor dem Fahrzeug befindet sich ein Gegenstand 20 in Form eines Pfahls.

Der Laserscanner 12 weist einen in Fig. 1 nur teilweise gezeigten ersten Erfassungsbereich 22 auf, der aufgrund der Anbaulage symmetrisch zur Längsachse des Fahrzeugs 10 einen Winkel von etwas mehr als 180° abdeckt. Der erste Erfassungsbereich 22 ist in Fig. 1 nur schematisch und zur besseren Darstellung insbesondere in radialer Richtung zu klein dargestellt. In dem ersten Erfassungsbereich 22 befindet sich beispielhaft der Pfahl 20 als zu erfassender Gegenstand.

Der Laserscanner 12 tastet seinen ersten Erfassungsbereich 22 in grundsätzlich bekannter Weise mit einem mit konstanter Winkelgeschwindigkeit umlaufenden, gepulsten Laserstrahlungsbündel 24 ab, wobei ebenfalls umlaufend in konstanten Zeitabständen Δt zu Zeiten τᵢ in festen Winkelbereichen um einen mittleren Winkel αᵢ detektiert wird, ob das Strahlungsbündel 24 von einem Punkt 26 bzw. Bereich eines Gegenstands wie des Pfahls 20 reflektiert wird. Der Index i läuft dabei von 1 bis zur Anzahl der Winkelbereiche im Erfassungsbereich 22. Von diesen Winkelbereichen ist in Fig. 1 nur ein Winkelbereich gezeigt, der dem mittleren Winkel αᵢ zugeordnet ist. Hierbei ist der Winkelbereich zur deutlicheren Darstellung übertrieben groß gezeigt. Der erste Erfassungsbereich 22 ist, wie in Fig. 2 erkennbar, bis auf die Aufweitung des Strahlenbündels 24 zweidimensional und verläuft in einer Abtastebene 28. Anhand der Laufzeit des Laserstrahlpulses wird der Sensorabstand dᵢ des Gegenstandspunktes 26 von dem Laserscanner 12 ermittelt. Der Laserscanner 12 erfasst daher als Koordinaten in einem dem Gegenstandspunkt 26 des Gegenstands bzw. Pfahls 20 entsprechenden Entfernungsbildpunkt den Winkel αᵢ und den bei diesem Winkel festgestellten Abstand dᵢ, das heißt die Position des Gegenstandspunkts 26 in Polarkoordinaten. Jedem Entfernungsbildpunkt ist daher ein Gegenstandspunkt zugeordnet.

Die Menge der bei einer Abtastung erfassten Entfernungsbildpunkte bildet ein tiefenaufgelöstes Bild im Sinne der vorliegenden Anmeldung.

Der Laserscanner 12 tastet den ersten Erfassungsbereich 22 jeweils in aufeinander folgenden Abtastungen ab, so dass eine zeitliche Folge von Abtastungen und entsprechenden Tiefenbildern entsteht.

Die monokulare Videokamera 16 des Videosystems 14 ist eine konventionelle Schwarz-Weiß-Videokamera mit einem CCD-Flächensensor 30 und einer abbildenden Vorrichtung, die in den Fig. 1 und 2 schematisch als einfache Linse 34 dargestellt ist, tatsächlich aber aus einem Linsensystem besteht, und aus einem zweiten Erfassungsbereich 36 des Videosystems einfallendes Licht auf den CCD-Flächensensor 30 abbildet. Eine optische Achse 32 der Videokamera 16 ist auf die Abtastebene 28 des Laserscanners 12 zu in einem geringen, in Fig. 2 übertrieben groß gezeigten Winkel geneigt.

Der CCD-Flächensensor 30 weist in einer Matrix angeordnete Photodetektionselemente auf. Signale der Photodetektionselemente werden ausgelesen, wobei Videobilder mit Videobildpunkten gebildet werden, die zunächst die Positionen der Photodetektionselemente in der Matrix oder eine andere Kennung für die Photodetektionselemente und jeweils einen der Intensität des von dem entsprechenden Photodetektionselement empfangenen Lichts entsprechenden Intensitätswert enthalten. Die Videobilder werden in diesem Ausführungsbeispiel mit der gleichen Rate erfasst, mit der von dem Laserscanner 12 tiefenaufgelöste Bilder erfasst werden.

Von dem Pfahl 20 ausgehendes Licht wird durch die Linse 34 auf den CCD-Flächensensor 30 abgebildet. Dies ist in den Fig. 1 und 2 für die Umrisse des Gegenstands bzw. Pfahls 20 durch die kurzgestrichelten Linien schematisch angedeutet.

Aus dem Abstand von CCD-Flächensensor 30 und Linse 34 sowie aus der Lage und den Abbildungseigenschaften der Linse 34, beispielsweise deren Brennweite, kann aus der Lage eines Gegenstandspunktes, z. B. des Gegenstandspunktes 26 auf dem Pfahl 20, berechnet werden, auf welchen Ort des CCD-Flächensensors 30 der matrixförmig angeordneten Photodetektionselemente der Gegenstandspunkt abgebildet wird.

Ein Überwachungsbereich 38 ist in den Fig. 1 und 2 schematisch durch eine gepunktete Linie näherungsweise dargestellt und durch den Schnitt des ersten und des zweiten Erfassungsbereichs 22 des Laserscanners 12 bzw. 36 des Videosystems 14 gegeben. Innerhalb dieses Überwachungsbereichs 38 befindet sich der Gegenstand 20.

Zur Verarbeitung der Bilder des Laserscanners 12 und des Videosystems 14 ist die Datenverarbeitungseinrichtung 18 vorgesehen, die dazu mit dem Laserscanner 12 und dem Videosystem 14 verbunden ist. Die Datenverarbeitungseinrichtung 18 weist unter anderem einen zur Ausführung des erfindungsgemäßen Verfahrens programmierten digitalen Signalprozessor und eine mit dem digitalen Signalprozessor verbundene Speichereinrichtung auf. Bei einer anderen Ausführungsform der erfindungsgemäßen Vorrichtung zur Bereitstellung von Bildinformationen kann die Datenverarbeitungseinrichtung auch einen konventionellen Prozessor aufweisen, mit dem ein in der Datenverarbeitungseinrichtung gespeichertes erfindungsgemäßes Computerprogramm zur Ausführung des erfindungsgemäßen Verfahrens ausgeführt wird. Die Datenverarbeitungseinrichtung 18 stellt daher eine erste Einrichtung zur Verarbeitung tiefenaufgelöster Bilder und eine zweite Einrichtung zur Ermittlung eines optischen Flusses im Sinne der Erfindung dar.

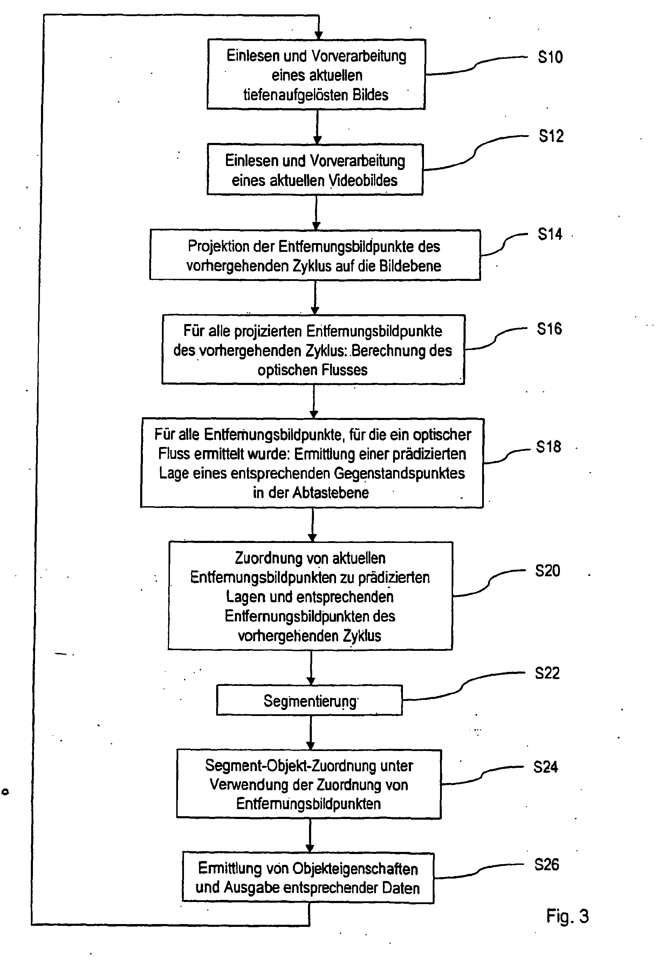

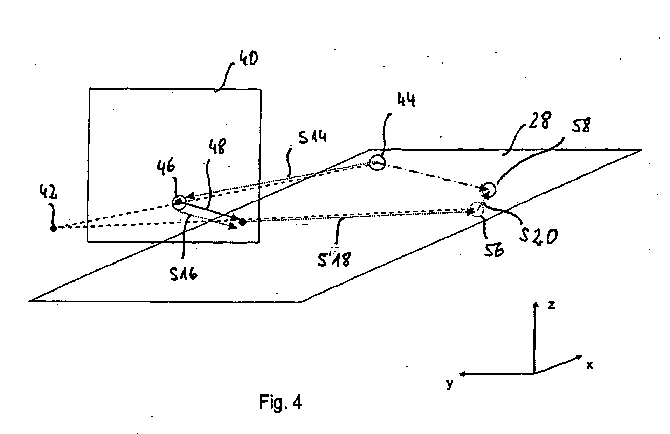

Auf der Basis von von dem Laserscanner 12 und dem Videosystem 14 synchron erfassten tiefenaufgelösten Bildern bzw. Videobildern wird das in Fig. 3 und 4 veranschaulichte Verfahren nach einer ersten bevorzugten Ausführungsform der Erfindung durchgeführt. In Fig. 4 sind dabei, wie in entsprechenden Darstellungen für weitere bevorzugte Ausführungsformen der Erfindung auch, einzelne Schritte durch gepunktete Pfeile gekennzeichnet, die mit den Bezugszeichen der entsprechenden Schritte versehen sind.

Zunächst werden in den Schritten S10 und S12 ein aktuelles tiefenaufgelöstes Bild und ein aktuelles Videobild eingelesen und vorverarbeitet. Diese Schritte können unabhängig voneinander in beliebiger Reihenfolge oder auch parallel durchgeführt werden.

In Schritt S10 wird dabei, gegebenenfalls nach Korrekturen der Daten, eine Transformation der Lagekoordinaten der Entfernungsbildpunkte in ein kartesisches, fest mit dem Fahrzeug verbundenes Fahrzeugkoordinatensystem durchgeführt. Dabei werden die Lagekoordinaten, die sich aus den Polarkoordinaten in der Abtastebene ergeben, durch die durch die Abtastebene, in der die den Entfernungsbildpunkten entsprechenden Gegenstandspunkte liegen, bestimmte Lagekomponente zu einem vollständigen Lagekoordinatensatz in drei Dimensionen ergänzt. Mit der Lage eines Entfernungsbildpunkts wird im Folgenden die durch diese Koordinaten definierte Position bezeichnet. Jedem Entfernungsbildpunkt wird eine Kennung zugeordnet, die einer Menge vorgegebener aktuell unbenutzter Kennungen entnommen ist.

In Schritt S12 werden, ebenfalls nach eventuellen Korrekturen des Videobildes, die Daten des Videobildes in das Fahrzeugkoordinatensystem transformiert. Dazu wird eine Rektifikation der Videobilddaten, beispielsweise zur Beseitigung von Verzerrungen, und eine Transformation der Videobildpunkte auf eine zur Definition bzw. Berechnung eines optischen Flusses verwendete Bildebene durchgeführt (vgl. Fig. 4). Der Einfachheit halber wird für eine in Schritt S14 durchzuführende Projektion von Entfernungsbildpunkten in die Bildebene ein dem Fachmann grundsätzlich bekanntes modifiziertes Lochkamera- bzw. Mattscheiben-Modell für die Videokamera 16 verwendet, das durch die Lage eines optischen Zentrums 42 und der Bildebene 40 definiert ist, die als Fläche zur Definition bzw. Ermittlung des optischen Flusses dient. Die Lage des optischen Zentrums 42 wird unter Verwendung der Abbildungsgeometrie der Videokamera 14 ermittelt. Das Lochkamera-Modell ist zur vereinfachten Darstellung dahingehend modifiziert, dass die Bildebene 40 an einer relativ zu dem Videosystem 14 an dem Fahrzeug 10 festen Position zwischen dem optischen Zentrum 42 und den Gegenstandspunkten, in Fig. 4 den Punkten 44 und 58, liegt und durch Punktspiegelung der eigentlichen Bildebene an dem optischen Zentrum 42 aus dieser hervorgeht.

Das aktuelle tiefenaufgelöste Bild und das aktuelle Videobild werden dann zur weiteren Verwendung abgespeichert.

In Schritt S14, der im ersten Zyklus entfällt, werden unter Verwendung des Kameramodells für alle Entfernungsbildpunkte aus dem dem aktuellen Zyklus unmittelbar vorhergehenden Zyklus entsprechende Lagen bzw. Koordinaten entsprechender Videobildpunkte in der Bildebene 40 berechnet und zur Verwendung im folgenden Zyklus gespeichert. Dazu wird, geometrisch in Fig. 4 für einen vorhergehenden Zyklus veranschaulicht, der Schnittpunkt 46 einer durch einen Entfernungsbildpunkt, in Fig. 4 dem Entfernungsbildpunkt 44, und das optische Zentrum 42 verlaufenden Geraden mit der Bildebene 40 (vgl. Fig. 4) ermittelt.

In Schritt S16, der ebenfalls im ersten Zyklus entfällt, werden dann für alle projizierten Entfernungsbildpunkte bzw. Schnittpunkte des vorhergehenden Zyklus entsprechende aktuelle optische Flussvektoren, im Folgenden auch nur als optische Flüsse bezeichnet, auf der Basis des Videobildes aus dem unmittelbar vorhergehenden Zyklus und aus dem aktuellen Zyklus ermittelt und durch Multiplikation mit der Zyklusdauer bzw. dem Kehrwert der Abtastfrequenz in eine Verschiebung umgerechnet. Die optischen Flussvektoren entsprechen dabei einer Geschwindigkeit einer Verschiebung eines entsprechenden Intensitätsverlaufs zwischen zwei aufeinander folgenden Erfassungen von Videobildern. In Fig. 4 ist dies für den Entfernungsbildpunkt 44 gezeigt, für den an dem Schnittpunkt 46 ein optischer Flussvektor bestimmt wird, der in der Bildebene 40 liegt und der nach Skalierung mit der Zykluszeit einen in dem Schnittpunkt 46 beginnenden Verschiebungsvektor 48 ergibt. Optische Flussvektoren bzw. die durch Multiplikation mit der Zyklusdauer erhaltenen Verschiebungsvektoren sind in den Figuren allgemein durch Pfeile dargestellt, die in einer Raute beginnen, die einen Videobildpunkt bzw. eine projizierte Lage eines Entfernungsbildpunkts darstellt.

Der optische Fluss wird mittels eines differentiellen Verfahrens ermittelt, in diesem Beispiel dem in "Performance of Optical Flow Techniques" von J. L. Barron, D. J. Fleet, D. J. and S. S. Beauchemin in International Journal of Computer Vision, 12(1), Seiten 43-77 (1994) beschriebenen Verfahren nach Lucas und Kanade. Je nach Intensitätsverlauf in dem Videobild kann der Fall auftreten, dass ein optischer Fluss nicht ermittelbar ist, beispielsweise da alle umliegenden Videobildpunkte die gleiche Intensität aufweisen. In diesem Fall wird für den entsprechenden Entfernungsbildpunkt als Merker ein vorgegebener Wert für den optischen Fluss gespeichert, der in der Realität nicht vorkommen sollte. Der optische Fluss entspricht hier einer Geschwindigkeit. Alternativ kann er auch als entsprechende Verschiebung über einen Zyklus ermittelt werden, so dass die oben genannte Skalierung entfallen kann.

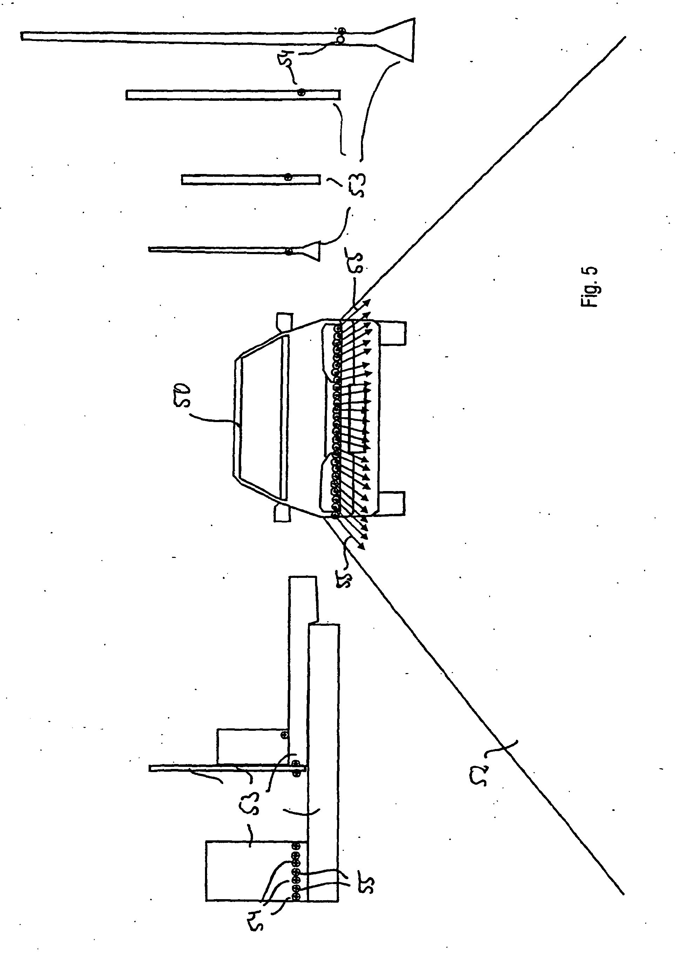

Fig. 5 zeigt eine Szene mit einem Kraftfahrzeug 50 auf einer Fahrbahn 52 und mehreren Gegenständen 53, auf denen, durch offene Kreise gekennzeichnet, Gegenstandspunkte bzw. Entfernungsbildpunkte 54 erfasst wurden. Gekennzeichnet durch Pfeile, die in einer Raute beginnen, oder nur durch eine Raute sind optische Flussvektoren 55, die für entsprechende Entfernungsbildpunkte berechnet werden konnten, wobei die Pfeillänge der Größe der Verschiebung während eines Zyklus entspricht. Der optische Fluss kann in dem Beispiel an den Orten ermittelt werden, an denen die Intensität hinreichend starke räumliche Variationen aufweist.

In Schritt S18, der ebenfalls im ersten Zyklus entfällt, werden für alle Entfernungsbildpunkte, für die ein optischer Fluss ermittelt werden konnte, unter Verwendung der entsprechenden optischen Flüsse bzw. der entsprechenden Verschiebungsvektoren und des Kamera-Modells prädizierte Entfernungsbildpunkte ermittelt, das heißt Lagen entsprechender Gegenstandspunkte prädiziert. In Fig. 4 für den Entfernungsbildpunkt 44 gezeigt, wird dazu, geometrisch veranschaulicht, der Schnittpunkt einer Geraden durch das optische Zentrum 42 und das Ende des aus dem optischen Fluss berechneten Verschiebungsvektors 48 mit der Abtastebene 28 bestimmt, der eine prädizierte Lage 56 eines dem Gegenstandspunkt des Entfernungsbildpunktes 44 entsprechenden Entfernungsbildpunktes des aktuellen Zyklus wiedergibt.

In Schritt S20, der ebenfalls im ersten Zyklus entfällt, werden dann für alle prädizierten Lagen in dem aktuellen Zyklus erfasste Entfernungsbildpunkte gesucht, die diesen nach einem entsprechenden Zuordnungskriterium zuzuordnen sind. Dazu werden für eine gegebene prädizierte Lage 56 die aktuellen Entfernungsbildpunkte 58 gesucht, die das Zuordnungskriterium erfüllen, dass deren quadratischer Abstand kleiner als ein maximaler quadratischer Abstand ist, der in Abhängigkeit von dem Auflösungsvermögen des Laserscanners 12 und des Videosystems 14 und gegebenfalls weiteren Parametern vorgegeben ist.

Wird ein aktueller Entfernungsbildpunkt einer prädizierten Lage bzw. dem entsprechenden Entfernungsbildpunkt aus dem vorhergehenden Zyklus zugeordnet, erhält er eine Kennung, die in dem vorhergehenden Zyklus dem Entfernungsbildpunkt aus dem vorhergehenden Zyklus zugeordnet worden war. Die bisher zugeordnete Kennung wird in die Menge der unbenutzten Kennungen zurückgeführt. Entfernungsbildpunkte mit der gleichen Kennung entsprechen daher dem im Wesentlichen gleichen Gegenstandspunkt, so dass auf diese Weise eine Verfolgung eines Gegenstandspunktes wenigstens über wenige Zyklen gegeben ist. Diesem Gegenstandspunkt entspricht die Kennung des Entfernungsbildpunktes. Werden mehrerer Entfernungsbildpunkte des aktuellen Zyklus ermittelt, die dem gleichen Entfernungsbildpunkt des vorhergehenden Zyklus zuzuordnen sind, wird nur die Kennung desjenigen Entfernungsbildpunktes des aktuellen Zyklus durch die des Entfernungsbildpunkts des vorhergehenden Zyklus ersetzt, der diesem am nächsten ist.

In Fig. 4 ist die Zuordnung von Entfernungsbildpunkten des aktuellen Zyklus zu solchen des vorhergehenden Zyklus durch strichpunktierte Linien gekennzeichnet.

In Schritt S22 wird dann eine Segmentierung des aktuellen tiefenaufgelösten Bildes durchgeführt. Dazu werden Segmente gebildet, die jeweils einen einzelnen Entfernungsbildpunkt oder eine Menge aller Entfernungsbildpunkte umfassen, von denen jeweils mindestens zwei entsprechend wenigstens einem Segmentierungskriterium als dem Segment zugehörig definiert werden, und die untereinander keine gemeinsamen Entfernungsbildpunkte aufweisen. Als Segmentierungskriterium wird hier verwendet, dass der quadratische Abstand der Entfernungsbildpunkte kleiner als ein vorgegebener, in Abhängigkeit vom Auflösungsvermögen des Laserscanner 12 gewählter, quadratischer Trennabstand ist.

In Schritt S24 erfolgt dann eine Zuordnung von Segmenten zu bestehenden Objekten aus einem vorhergehenden Zyklus. Dazu sind jedem Objekt Kennungen von Entfernungsbildpunkten zugeordnet, die in Segmenten enthalten waren, die in einem vorhergehenden Zyklus dem Objekt zugeordnet wurden. Es werden im aktuellen Zyklus daher jedem Objekt diejenigen Segmente zugeordnet, die Entfernungsbildpunkte mit einer Kennung aufweisen, die dem Objekt in dem vorhergehenden Zyklus zugewiesen wurde. Durch die Verfolgung der Gegenstandspunkte in dem tiefenaufgelösten Bild kann so erreicht werden, dass Segmente einem Objekt nur zugeordnet werden, wenn der betreffende Gegenstandspunkt dem dem Objekt entsprechenden Gegenstand angehört. Die bei bekannten Algorithmen verwendet Zuordnung allein über Abstandskriterien kann so verbessert werden oder ganz entfallen. Dem Objekt werden nun statt der Kennungen aus dem vorhergehenden Zyklus alle Kennungen derjenigen Entfernungsbildpunkte zugeordnet, die in Segmenten aufgetreten sind, die dem Objekt zugeordnet sind.

Aus nicht zugeordneten Segmenten werden neue Objekte gebildet, denen ebenfalls entsprechende Kennungen der Entfernungsbildpunkte zugeordnet werden. Nicht mehr verwendete Kennungen werden der Menge nicht benutzter Kennungen hinzugefügt.

In Schritt S26 werden dann aus den Lagen der Entfernungsbildpunkte Objekteigenschaften wie beispielsweise die Lage eines Schwerpunkts und, durch Vergleich mit der Schwerpunktslage in dem vorhergehenden Zyklus, eine Geschwindigkeit des Schwerpunkts bestimmt und entsprechende Objektdaten ausgegeben.

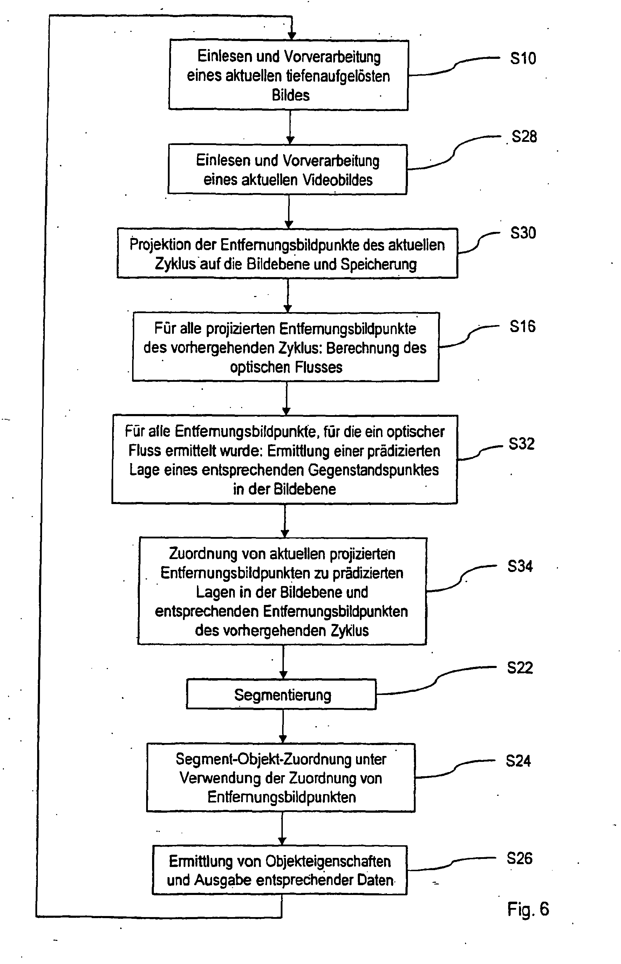

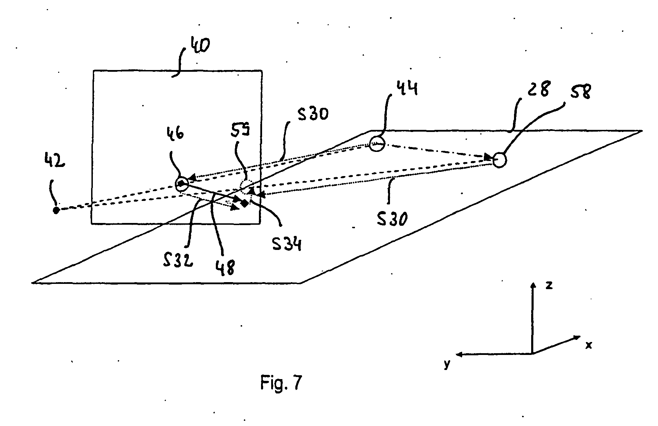

Bei einem in den Fig. 6 und 7 veranschaulichten Verfahren nach einer zweiten bevorzugten Ausführungsform der Erfindung sind gegenüber dem ersten Verfahren die Schritte S12, S14, S18 und S20 durch Schritte S28, S30, S32 und S34 ersetzt. Im Wesentlichen wird nach dieser Ausführungsform die Prädiktion und die Zuordnung von Entfernungsbildpunkten nicht in der Abtastebene 28, sondern in der Bildebene 40 durchgeführt (vgl. Fig. 7). Zur Durchführung wird eine Vorrichtung nach einer zweiten bevorzugten Ausführungsform der Erfindung verwendet, bei der gegenüber der Vorrichtung nach der ersten bevorzugten Ausführungsform die Datenverarbeitungseinrichtung 18 durch eine Datenverarbeitungseinrichtung ersetzt ist, die zur Durchführung des Verfahrens nach der zweiten bevorzugten Ausführungsform programmiert ist. Für gleiche bzw. entsprechende Elemente werden der Übersichtlichkeit halber die gleichen Bezugszeichen verwendet und es gelten die Erläuterungen für das erste Ausführungsbeispiel, soweit nicht anders beschrieben, entsprechend.

In Schritt S28 wird als Korrektur zusätzlich zu den Verarbeitungsteilschritten in Schritt S12 eine Wank- und Nickwinkelkompensation durchgeführt. Dazu werden entsprechende Daten mittels eines entsprechenden, in modernen Fahrzeugen ohnehin vorhandenen Sensorsystems zur Wankund Nickwinkelerfassung erfasst und die Lagen der Videobildpunkte in der Bildebene 40 entsprechend korrigiert. Hierdurch können nur scheinbar durch eine Translationsbewegung eines Gegenstands relativ zu dem Videosystem 14 hervorgerufene Änderungen des Intensitätsverlaufs und damit des optischen Flusses eliminiert werden.

In Schritt S30 werden statt der Entfernungsbildpunkte des vorhergehenden Zyklus die Entfernungsbildpunkte des aktuellen Zyklus in die Bildebene 40 projiziert und zur Verwendung in Schritt S16 im nächsten Zyklus gespeichert.

In Schritt S32 wird für jeden Entfernungsbildpunkt des vorhergehenden Zyklus eine prädizierte Lage in der Bildebene 40 ermittelt, die durch den Endpunkt des Verschiebungsvektors 48 gegeben ist, der sich durch Multiplikation mit der Zyklusdauer aus dem optischen Flussvektor ergibt, der in dem durch den Schnittpunkt 46 gegebenen, in die Bildebene 40 projizierten Entfernungsbildpunkt des vorhergehenden Zyklus beginnt. In Fig. 7 sind die prädizierte Lage durch eine Raute und der in die Bildebene 40 projizierte aktuelle Entfernungsbildpunkt 58 durch einen gepunkteten Kreis 59 veranschaulicht.

In Schritt S34 werden dann für jede prädizierte Lage unter allen in Schritt S30 in die Bildebene projizierten Entfernungsbildpunkten des aktuellen Zyklus zuzuordnende Entfernungsbildpunkte gesucht. Als Zuordnungskriterium wird hier verwendet, dass der quadratische Abstand der prädizierten Lage in der Bildebene 40 und der in die Bildebene 40 projizierten Lage kleiner als ein vorgegebener maximaler quadratischer Abstand ist, der in Abhängigkeit von dem Auflösungsvermögen des Laserscanners 12 und des Videosystems 14 und zu erwartender maximaler Gegenstandsgeschwindigkeiten vorgegeben ist. Die Zuordnung von Kennungen und Entfernungsbildpunkten zueinander erfolgt wie in Schritt S20.

Die Schritte S12 und S28 können in den Verfahren nach der ersten und der zweiten Ausführungsform der Erfindung auch ausgetauscht werden.

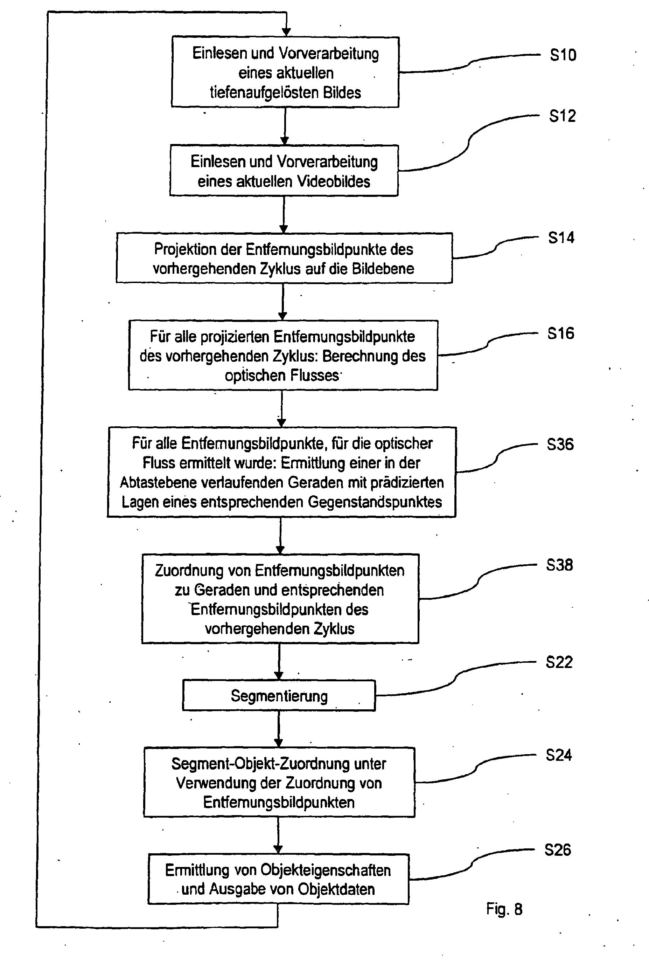

Bei einem in Fig. 8 veranschaulichten Verfahren nach einer dritten bevorzugten Ausführungsform der Erfindung sind gegenüber dem ersten Ausführungsbeispiel die Schritte S18 und S20 durch die Schritte S36 und S38 ersetzt. Dieses Verfahren ermöglicht eine näherungsweise Behandlung von Fehlern, die durch Nicken des Fahrzeugs 10 hervorgerufen werden können. Zur Durchführung wird eine Vorrichtung nach einer dritten bevorzugten Ausführungsform der Erfindung verwendet, bei der gegenüber der Vorrichtung nach der ersten bevorzugten Ausführungsform die Datenverarbeitungseinrichtung 18 durch eine Datenverarbeitungseinrichtung ersetzt ist, die zur Durchführung des Verfahrens nach der dritten bevorzugten Ausführungsform programmiert ist. Für gleiche bzw. entsprechende Elemente werden der Übersichtlichkeit halber die gleichen Bezugszeichen verwendet und es gelten die Erläuterungen für das erste Ausführungsbeispiel, soweit nicht anders beschrieben, entsprechend.

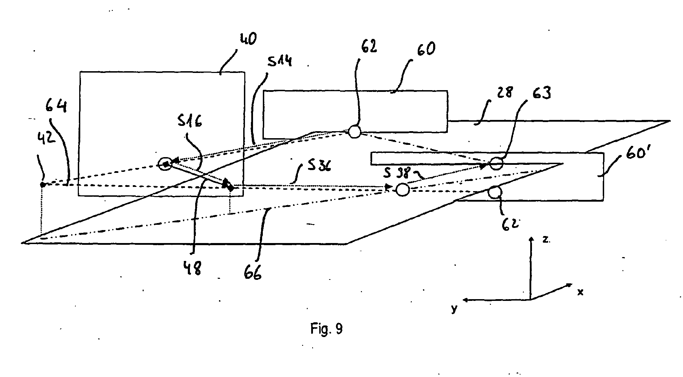

Eine entsprechende Situation ist in Fig. 9 gezeigt. Dort ist eine im Wesentlichen orthogonal zu der Abtastebene 28 verlaufende Seitenfläche eines Gegenstands in zwei unmittelbar aufeinander folgenden Zyklen gezeigt, die in einer Lage in einem dem aktuellen Zyklus unmittelbar vorhergehenden Zyklus mit dem Bezugszeichen 60 und in dem aktuellen Zyklus mit dem Bezugszeichen 60' gekennzeichnet ist. In dem vorhergehenden Zyklus wird auf der Seitenfläche 60 ein Gegenstandspunkt 62 erfasst, der in diesem Zyklus in der Abtastebene 28 liegt. In dem aktuellen Zyklus liegt derselbe Gegenstandspunkt 62 aufgrund einer Nickbewegung unterhalb der Abtastebene 28 und ist somit nicht mehr genau erfassbar. Stattdessen wird ein Gegenstandspunkt 63 erfasst, der sowohl auf der Seitenfläche 60' als auch in der Abtastebene 28 und etwa orthogonal zu der Abtastebene 28 über dem Gegenstandspunkt 62 liegt.

Um trotzdem eine Verfolgung ermöglichen zu können, wird bei diesem Verfahren nicht eine einzelne Lage für einen Gegenstands- bzw. Entfernungsbildpunkt prädiziert, sondern eine ganze Menge möglicher Lagen.

Dazu wird in Schritt S36 für jeden Entfernungsbildpunkt in dem vorhergehenden Zyklus, für den ein optischer Fluss ermittelt wurde, ein in der Abtastebene verlaufender Strahl mit möglichen prädizierten Lagen eines entsprechenden Gegenstandspunktes bestimmt. Hierzu wird mittels des Kameramodells eine von dem Ende des Verschiebungsvektors, der durch Multiplikation des dem Entfernungsbildpunkt entsprechenden optischen Flusses mit der Zyklusdauer gegeben ist, ausgehende Gerade bestimmt, auf oder nahe der zuzuordnende Entfernungsbildpunkte des aktuellen Zyklus liegen könnten. Im Beispiel ist das Kameramodell das modifizierte Lochkameramodell, so dass die Gerade 64 durch das optische Zentrum 42 und das Ende des dem optischen Flussvektor entsprechenden Verschiebungsvektors 48 verläuft. Diese Gerade 64 wird nun orthogonal auf die Abtastebene 28 projiziert, wodurch sich eine Gerade bzw. ein an der Projektion des Schnittpunkts der Geraden 64 mit der Bildebene 40 auf die Abtastebene beginnender Strahl 66 mit prädizierten Lagen in der Abtastebene ergibt.

In Schritt S38 erfolgt dann die Zuordnung von Entfernungsbildpunkten aus dem aktuellen Zyklus zu jedem der in Schritt S36 behandelten Entfernungsbildpunkte des, im Beispiel unmittelbar, vorhergehenden Zyklus. Als Zuordnungskriterium wird nun verwendet, dass zur Zuordnung ein aktueller Entfernungsbildpunkt 63 von der Geraden 66 in der Abtastebene 28 höchstens einen vorgegebenen maximalen Abstand aufweisen darf, der ähnlich bestimmt ist, wie in dem ersten Ausführungsbeispiel.

Bei einer etwas vereinfachten Alternative wird die Gerade 66 nicht ermittelt, sondern bei der Zuordnung der Abstand eines aktuellen Entfernungsbildpunktes 63 von der Geraden 64 parallel zur Abtastebene 28 statt des Abstands von der Geraden 66 verwendet. Die Ergebnisse sind in jedem Fall gleich, es können sich nur Unterschiede in der Ausführungsgeschwindigkeit ergeben.

Bei einem Verfahren nach einer vierten bevorzugten Ausführungsform wird das Verfahren nach der dritten bevorzugten Ausführungsform dahingehend modifiziert, dass bei der Zuordnung der quadratische Abstand von der Geraden 64 verwendet wird, und nicht nur die Komponente parallel zu der Abtastebene 28. Die Ermittlung der Geraden 66 ist dann nicht notwendig. Zur Durchführung wird eine Vorrichtung nach einer vierten bevorzugten Ausführungsform der Erfindung verwendet, bei der gegenüber der Vorrichtung nach der dritten bevorzugten Ausführungsform die Datenverarbeitungseinrichtung 18 durch eine Datenverarbeitungseinrichtung ersetzt ist, die zur Durchführung des Verfahrens nach der vierten bevorzugten Ausführungsform programmiert ist.

Ein Verfahren nach einer fünften bevorzugten Ausführungsform der Erfindung unterscheidet sich von dem Verfahren nach der dritten bevorzugten Ausführungsform dadurch, dass zwei Segmentierungskriterien verwendet werden. Als zweites Segmentierungskriterium wird nun benutzt, dass alle Entfernungsbildpunkte eines Segments eine Geschwindigkeit aufweisen müssen, die sich von denen der anderen Entfernungsbildpunkte in dem Segment um weniger als ein vorgegebener Geschwindigkeitsgrenzgrenzwert unterscheidet. Dabei wird zunächst nach der Zuordnung von Entfernungsbildpunkten des aktuellen und des vorhergehenden Zyklus zueinander aus den jeweiligen Lagen der Entfernungsbildpunkte im dem aktuellen und dem vorhergehenden Zyklus jeweils eine entsprechende Geschwindigkeit bestimmt.

Dies kann durch Ermittlung des Abstandes sich bzw. dem gleichen Gegenstandsbereich entsprechender Entfernungsbildpunkte zwischen zwei Zyklen und Division durch die Zyklusdauer eine entsprechende Geschwindigkeit erfolgen. Tritt der Fall auf, dass dem Entfernungsbildpunkt des vorhergehenden Zyklus bzw. dem entsprechenden Gegenstandspunkt wenigstens zwei Entfernungsbildpunkte des aktuellen Zyklus zugeordnet werden können, wird die Geschwindigkeit jedoch unter Verwendung von den zwei Entfernungsbildpunkten bestimmt, die der Kurve bzw. Geraden am nächsten sind. Dazu wird der Schnittpunkt der Kurve bzw. Gerade mit einer die zugeordneten Entfernungsbildpunkte verbindenden Geraden bestimmt. Aus der Differenz der Lagen des Entfernungsbildpunktes in dem vorhergehenden Zyklus und des Schnittpunkts und Division der Differenz durch die Zyklusdauer wird dann die Geschwindigkeit berechnet. Die so ermittelte Geschwindigkeit wird zur Segmentierung benutzt.

Zur Durchführung wird eine Vorrichtung nach der fünften bevorzugten Ausführungsform der Erfindung verwendet, bei der gegenüber der Vorrichtung nach der dritten bevorzugten Ausführungsform die Datenverarbeitungseinrichtung durch eine Datenverarbeitungseinrichtung ersetzt ist, die zur Durchführung des Verfahrens nach der fünften bevorzugten Ausführungsform programmiert ist.

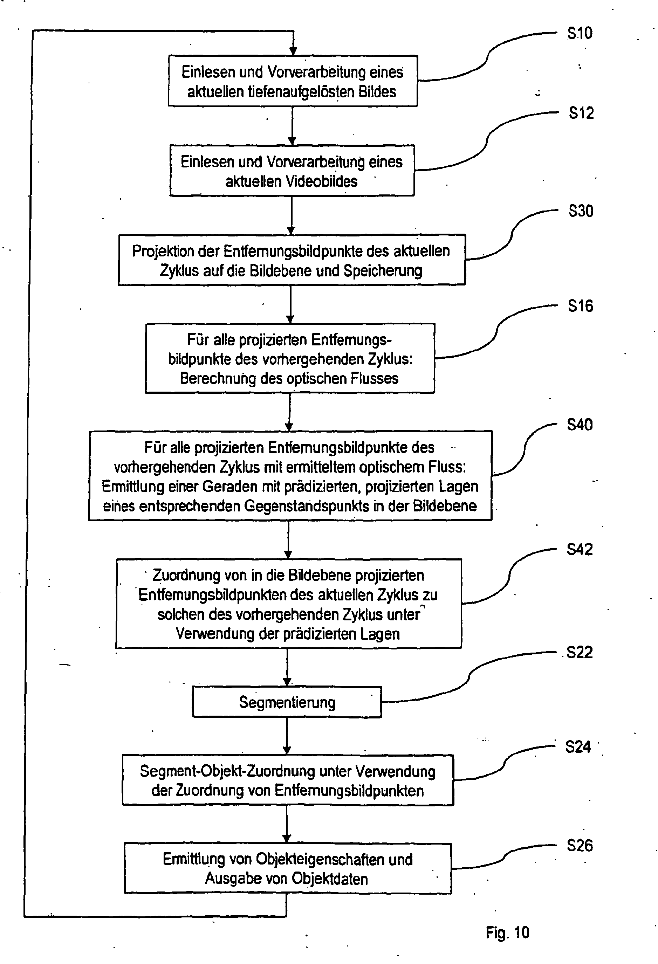

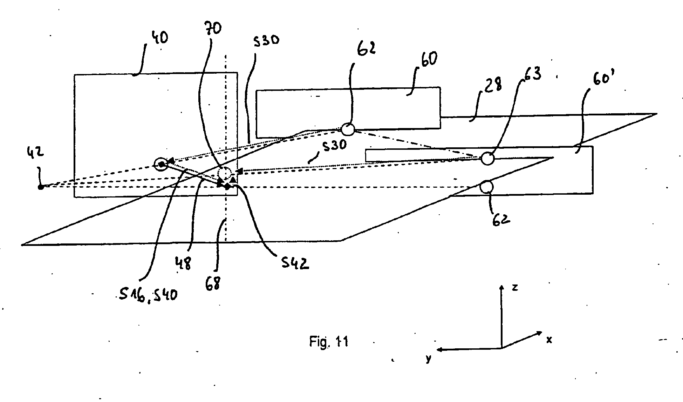

Bei einem Verfahren nach einer sechsten bevorzugten Ausführungsform der Erfindung sind gegenüber dem Verfahren nach der dritten bevorzugten Ausführungsform die Schritte S14, S36 und S38 durch den Schritt S30 des zweiten Ausführungsbeispiels sowie neue Schritte S40 und S42 ersetzt. Im Wesentlichen findet nun die Zuordnung in der Bildebene statt (vgl. Fig. 10 und 11). Zur Durchführung wird eine Vorrichtung nach einer sechsten bevorzugten Ausführungsform der Erfindung verwendet, bei der gegenüber der Vorrichtung nach der dritten bevorzugten Ausführungsform die Datenverarbeitungseinrichtung 18 durch eine Datenverarbeitungseinrichtung ersetzt ist, die zur Durchführung des Verfahrens nach der sechsten bevorzugten Ausführungsform programmiert ist. Für gleiche bzw. entsprechende Elemente werden der Übersichtlichkeit halber die gleichen Bezugszeichen verwendet und es gelten die Erläuterungen für das zweiten bzw. dritte Ausführungsbeispiel, soweit nicht anders beschrieben, entsprechend.

Schritt S30 wird wie in dem Verfahren nach der zweiten bevorzugten Ausführungsform der Erfindung durchgeführt.

In Schritt S40 wird für alle Entfernungsbildpunkte des vorhergehenden Zyklus, für die ein optischer Fluss ermittelt wurde - in Fig. 11 beispielhaft für den Entfernungsbildpunkt 62 - jeweils eine Gerade 68 (vgl. Fig. 11) mit möglichen prädizierten Lagen von in die Bildebene projizierten, aktuellen Entfernungsbildpunkten bestimmt, die demselben Gegenstandspunkt entsprechen wie der jeweils betrachtete Entfernungsbildpunkt des vorhergehenden Zyklus. Die Gerade 68 verläuft dabei orthogonal zu der Abtastebene 28 und in der Bildebene 40 durch den Endpunkt des dem durch den entsprechenden optischen Flussvektor bestimmten Verschiebungsvektors 48.

Bei der Zuordnung in Schritt S42 wird dann als Zuordnungskriterium verwendet, dass eine Zuordnung nur erfolgt, wenn die in Schritt S30 bestimmten projizierten Entfernungsbildpunkte, in Fig. 11 gekennzeichnet durch den gepunkteten Kreis 70, von der Geraden 68 in der Bildebene 40 einen quadratischen Abstand aufweisen, der kleiner als ein vorgegebener maximaler Abstand ist.

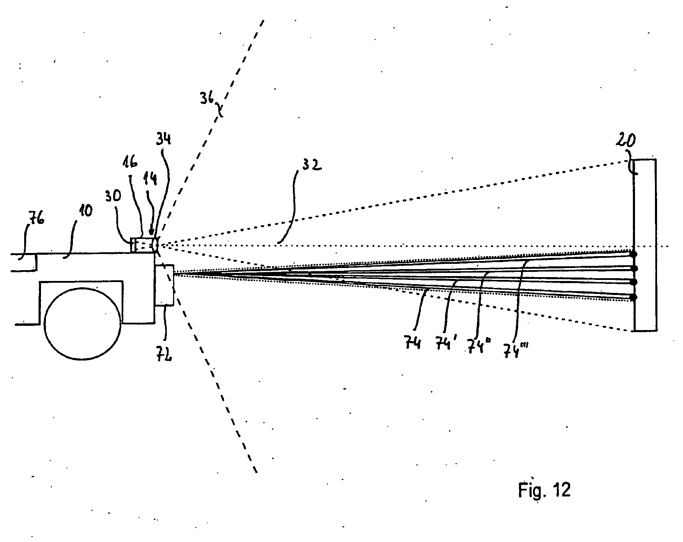

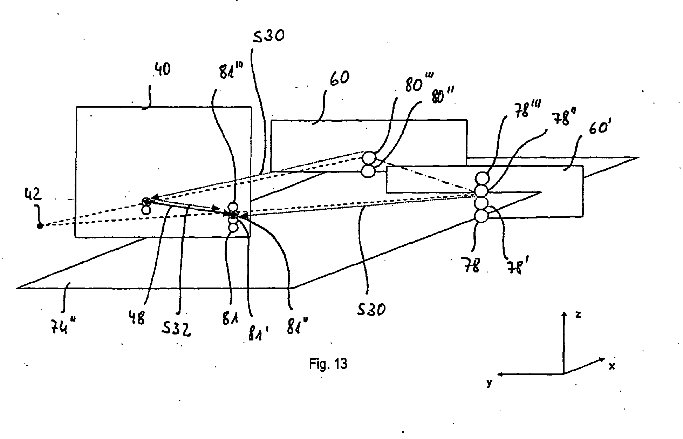

Bei einem in Fig. 13 veranschaulichten Verfahren nach einer siebten bevorzugten Ausführungsform der Erfindung wird eine in Fig. 12 in einer Seitenansicht gezeigte Vorrichtung nach einer siebten bevorzugten Ausführungsform der Erfindung verwendet.

Der Laserscanner 12 ist nun durch einen Laserscanner 72 ersetzt, der, in Fig. 12 nur schematisch gezeigt, vier fächerartig angeordnete Abtastebenen 74, 74', 74" und 74"' aufweist. Dazu wird ein Laserstrahl mit einem länglich rechteckigen Profil über den Erfassungsbereich geschwenkt und das von Gegenständen zurückgeworfene Licht durch vier entsprechend ausgerichtete Detektoren empfangen, so dass sich im Ergebnis eine Abtastung in vier zueinander in einem kleinen Winkel zueinander geneigten Abtastebenen 74, 74', 74", 74"' ergibt. Weiterhin ist die Datenverarbeitungseinrichtung 18 durch die Datenverarbeitungseinrichtung 76 ersetzt, die sich von der Datenverarbeitungseinrichtung 18 durch das Computerprogramm unterscheidet, das nun zur Durchführung des Verfahrens nach der siebten Ausführungsform der Erfindung eingerichtet ist.

Das Verfahren unterscheidet sich von dem Verfahren nach der zweiten Ausführungsform im Wesentlichen dadurch, dass zum einen Entfernungsbildpunkte in mehreren Abtastebenen verwendet werden und dass zum anderen als Konsequenz der Schritt S32, d.h. die Zuordnung von Entfernungsbildpunkten, modifiziert ist.

Eine Situation, die denen in Fig. 9 und 11 entspricht, ist beispielhaft in Fig. 13 gezeigt. Für gleiche Elemente wie in Fig. 9 und 11 werden gleiche Bezugszeichen verwendet. Auf den Seitenflächen 60' und 60' in dem aktuellen bzw. dem diesem unmittelbar vorhergehenden Zyklus sind vier Gegenstands- bzw. Entfernungsbildpunkte 78, 78', 78" und 78"' bzw. - bedingt durch eine Nickbewegung - zwei Gegenstands- bzw. Entfernungsbildpunkte 80", 80"' erfasst worden. Dabei liegen die Entfernungsbildpunkte 78" und 80" und die Entfernungsbildpunkte 78"' und 80"' jeweils in einer Abtastebene.

Die Verarbeitung der Entfernungsbildpunkte und der Videobildpunkte erfolgt in allen Schritten außer dem Schritt S32 wie in dem Verfahren nach der zweiten bevorzugten Ausführungsform, wobei jedoch bei den Umrechnungen jeweils der Winkel der jeweiligen Abtastebene zu der Videokamera zu berücksichtigen ist. In der in Fig. 13 gezeigten Situation werden daher nur die zwei erfassten Entfernungsbildpunkte 80" und 80"' entsprechend ihrer durch jeweiligen Abtastebenen mit bestimmten Lage im Raum in die Bildebene 40 projiziert und für diese ein optischer Fluss und - soweit möglich - ein entsprechender Verschiebungsvektor ermittelt, was in Fig. 13 der Übersichtlichkeit halber nur für den Entfernungsbildpunkt 80"' mit dem Verschiebungsvektor 48 gezeigt ist. Weiterhin werden die vier Entfernungsbildpunkte 78, 78', 78", 78"' des aktuellen Zyklus unter Berücksichtung der Lagen der entsprechenden Abtastebenen in die Bildebene 40 projiziert. Diesen entsprechen in Fig. 13 die Punkte 81, 81', 81" und 81"'.

In dem Schritt S32 entsprechenden Schritt erfolgt die Zuordnung von Entfernungsbildpunkten des aktuellen Zyklus zu solchen des vorherigen Zyklus, in dem eine Zuordnung unabhängig von der Zugehörigkeit zu einer Abtastebene geprüft wird. Dazu wird das Zuordnungskriterium benutzt, dass eine Zuordnung nur stattfindet, wenn der quadratische Abstand eines in die Bildebene 40 projizierten Entfernungsbildpunktes (in Fig. 13 die Punkte 81, 81', 81" und 81"') von einer prädizierten Lage (in Fig. 13 durch eine Raute gekennzeichnet) kleiner als ein vorgegebener quadratischer maximaler Abstand ist. In dem Beispiel in Fig. 13 wird daher dem Entfernungsbildpunkt 80"' des vorhergehenden Zyklus, der in der Abtastebene 74"' über der Abtastebene 74" liegt, der Entfernungsbildpunkt 78" des aktuellen Zyklus in der Abtastebene 74" zugeordnet.

Hierdurch ergibt sich eine weitgehende Berücksichtigung von Nickbewegungen sowohl in dem Videobild als auch in dem tiefenaufgelösten Bild und damit die Möglichkeit einer zuverlässigen Objektverfolgung.

Ein Verfahren nach einer achten bevorzugten Ausführungsform der Erfindung unterscheidet sich von dem Verfahren nach der siebten bevorzugten Ausführungsform dadurch, dass in Schritt S22 die Segmentierung unter Verwendung von zwei Segmentierungskriterien durchgeführt wird, die kumulativ erfüllt sein müssen. Das Segmentierungskriterium in Bezug auf die Abstände unterscheidet sich von dem in den anderen Ausführungsbeispielen nicht. Als zweites Segmentierungskriterium wird nun benutzt, dass alle Entfernungsbildpunkte eines Segments einen entsprechenden optischen Fluss aufweisen müssen, der sich von denen der anderen Entfernungsbildpunkte in dem Segment um weniger als einen vorgegebenen Grenzwert unterscheidet. Durch dieses zusätzliche Kriterium wird die Segmentierung wesentlich trennschärfer.

Weiterhin werden Segmente durch Verfolgung der Kennungen der in ihnen enthaltenen Entfernungsbildpunkte einzeln verfolgt, so dass durch vergleich der Lagen der Segmente eine Drehung des Objekts, dem die Segmente zugeordnet sind, einfach ermittelbar ist.

Zur Durchführung wird eine Vorrichtung nach einer achten bevorzugten Ausführungsform der Erfindung verwendet, bei der gegenüber der Vorrichtung nach der siebten bevorzugten Ausführungsform die Datenverarbeitungseinrichtung 76 durch eine Datenverarbeitungseinrichtung ersetzt ist, die zur Durchführung des Verfahrens nach der achten bevorzugten Ausführungsform programmiert ist.

Die Segmentierung in dem fünften oder achten Ausführungsbeispiel kann entsprechend auch in den anderen Ausführungsbeispielen verwendet werden, wobei gegebenenfalls statt der Abstände von Entfernungsbildpunkten Abstände von projizierten Entfernungsbildpunkten in der Bildebene verwendet werden.

Bei einem Verfahren nach einer neunten bevorzugten Ausführungsform der Erfindung wird eine Vorrichtung nach einer neunten bevorzugten Ausführungsform verwendet, die zum einen statt des Laserscanners 12 einen teilweise analog zu dem Laserscanner arbeitenden bildgebenden Radarsensor aufweist, der gleichzeitig mit den durch Laufzeitmessung gewonnenen Entfernungs- bzw. Lagedaten Radialgeschwindigkeiten erfasst, die den Entfernungsbildpunkten zugeordnet werden. Zum anderen ist die Datenverarbeitungseinrichtung 18 zur Durchführung des Verfahrens nach der neunten bevorzugten Ausführungsform der Erfindung ausgebildet, indem sie ein entsprechendes erfindungsgemäßes Computerprogramm aufweist. Für sich entsprechende Elemente werden daher die gleichen Bezugszeichen verwendet wie in dem ersten Ausführungsbeispiel und es gelten die gleichen Ausführungen entsprechend.

Das Verfahren nach der neunten Ausführungsform unterscheidet sich von dem Verfahren nach der ersten Ausführungsform zum einen dadurch, dass auch die erfassten Radialgeschwindigkeiten in das Fahrzeugkoordinatensystem transformiert werden müssen, was in einem dem Schritt S 10 entsprechenden Schritt erfolgt.

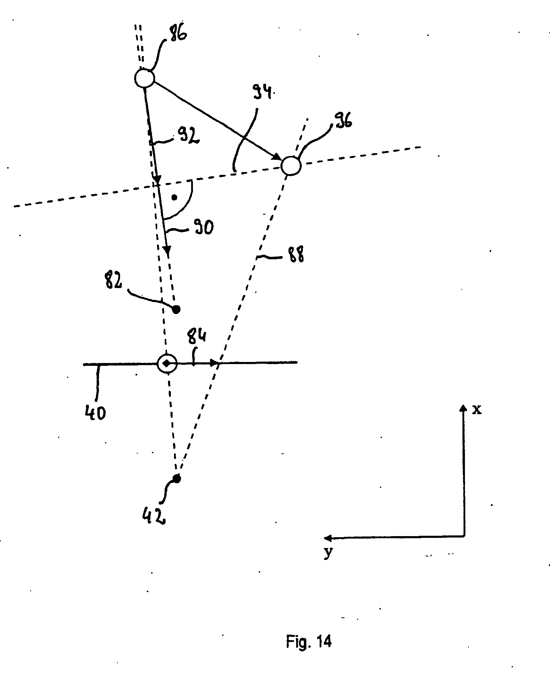

Zum anderen ist der Prädiktionsschritt S20 modifiziert. Die diesem zugrunde liegenden Zusammenhänge sind in Fig. 14 für den allgemeinen Fall gezeigt, dass ein Bezugspunkt 82 des Radarsensors nicht mit dem optischen Zentrum 42 der Videokamera 16 zusammenfällt. Die Bildebene 40 bleibt unverändert.

Aus dem Endpunkt eines einem optischen Flussvektor entsprechenden Verschiebungsvektors 84, der für einen Entfernungsbildpunkt 86 des vorhergehenden Zyklus ermittelt wurde, und dem optischen Zentrum 42 der Videokamera 16 kann eine Gerade bzw. ein Strahl 88 in der x-y-Ebene gebildet werden, auf der bzw. dem gemäß der Prädiktion auf der Basis der durch den optischen Fluss gegebenen Verschiebung der Entfernungsbildpunkt des aktuellen Zyklus liegen muss. Aus der von dem Radarsensor gelieferten radialen Geschwindigkeitskomponente bzw. Radialgeschwindigkeit 90 wird auf der Basis des Zeitintervalls zwischen aufeinander folgenden Zyklen und des optischen Flusses eine Radialverschiebung 92 berechnet. Die prädizierte Gesamtverschiebung des Entfernungsbildpunktes 44 des vorhergehenden Zyklus umfasst zusätzlich zu dieser radialen Komponente eine orthogonal verlaufende tangentiale Verschiebung. In Fig. 14 ist eine orthogonal zu der Radialgeschwindigkeit 90 durch den Endpunkt der entsprechenden Radialverschiebung 92 verlaufende Gerade 94 eingezeichnet, auf der der tangentiale Verschiebungsvektor liegen muss. Der Schnittpunkt dieser Geraden 94 und des Strahls 88 durch den Endpunkt des dem optischen Flussvektor entsprechenden Verschiebungsvektors 84 und das optische Zentrum 42 der Videokamera 16 ergibt die prädizierte Lage 96 eines Entfernungsbildpunktes des aktuellen Zyklus, der dem dem Entfernungsbildpunkt 86 des vorhergehenden Zyklus entsprechenden Gegenstandspunkt entspricht.

Die Zuordnung kann dann wie in dem Verfahren nach der ersten bevorzugten Ausführungsform der Erfindung erfolgen.

Da der Radarsensor aufgrund der vertikalen Ausdehnung der Radarkeule relativ große bzw. hohe Gegenstandsbereiche erfasst, kann es notwendig sein, bei einem modifizierten Verfahren durch Verwendung von Kontextwissen den Hintergrund und gegebenenfalls Teile des Vordergrunds, beispielsweise die Fahrbahn, auszublenden.

Als Weiterbildung können auch, wenn die Radialgeschwindigkeit und der optische Flussvektor eine gemeinsame Komponente aufweisen, die jeweiligen daraus ableitbaren Verschiebungsvektoren korrigiert werden. Zunächst wird aus den gemeinsamen Komponenten der Radialgeschwindigkeit und des optischen Flussvektors bzw. der entsprechenden Verschiebungen ein, beispielsweise entsprechend der Messgenauigkeit, gewichteter Mittelwert gebildet. Die verbleibende Komponente des optischen Flussvektors bzw. der entsprechenden Verschiebung wird dann mit dem Verhältnis aus der Größe der Komponente in Richtung der Radialgeschwindigkeit und dem gemittelten Wert multipliziert, so dass sich aus dem Mittelwert und der reskalierten verbleibenden Komponente ein korrigierter Verschiebungsvektor ergibt. Auf diese Weise kann die Güte der Prädiktion weiter erhöht werden.

Bei einem weiteren bevorzugten Ausführungsbeispiel wird die Berechnung des optischen Flusses mit einer pyramidalen Implementation des differentiellen Verfahrens durchgeführt. Dazu wird das Bild zunächst verkleinert und in diesem verkleinerten Bild der optische Fluss gemessen. Dieser wird in das nächstgrößere Bild propagiert und verfeinert. Diese Schritte werden solange wiederholt, bis das Bild in der Ursprungsgröße zurückerhalten wird.

In einem alternativen bevorzugten Ausführungsbeispiel werden die optischen Flüsse mittels eines Korrelationsverfahrens bestimmt.

In noch einem weiteren bevorzugten Ausführungsbeispiel weist die Vorrichtung eine Videokamera auf, mittels derer Videobilder mit einer Frequenz erfassbar sind, die doppelt so groß wie die Frequenz zur Erfassung der tiefenaufgelösten Bilder ist. Es werden dann in jedem Zyklus in etwa gleichen Zeitabständen zwei Videobilder eingelesen. Da der optische Fluss immer für Entfernungsbildpunkte in dem vorhergehenden Zyklus berechnet wird, kann so bis zum Einlesen des aktuellen tiefenaufgelösten Bildes bereits parallel der optische Fluss für die ersten Hälfte des Zyklus ermittelt werden, während der optische Fluss für die zweite Hälfte zur gleichen Zeit wie zuvor berechnet wird. Die Gesamtverschiebung ergibt sich dann durch Addition der beiden optischen Flussvektoren und Multiplikation mit der halben Zyklusdauer. Auf diese Weise wird eine erhöhte Genauigkeit bei der Ermittlung des optischen Flusses erzielt.

Es werden nun noch spezielle Anwendungsfälle beschrieben, in denen die Erfindung besonders vorteilhaft ist.

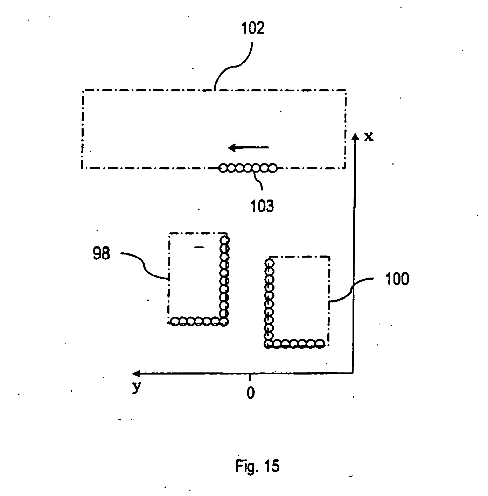

In Fig. 15 ist ein Ausschnitt aus einem tiefenaufgelösten Bild gezeigt, in dem, jeweils durch strichpunktierte Rechtecke gekennzeichnet, zwei Personenkraftwagen 98 und 100 einen sich in y-Richtung bewegenden Bus 102 teilweise verdecken. In dem tiefenaufgelösten Bild mit durch Kreise gekennzeichneten Entfernungsbildpunkten erscheint der Bus 102 auch in aufeinanderfolgenden Bildern nur als ein geradliniges Segment 103, das seine Lage nicht verändert. Dem sich bewegenden Bus könnte daher mit einem herkömmlichen Objektverfolgungsverfahren nur eine Geschwindigkeit Null in y-Richtung zugeordnet werden.

Weist der Bus 102 auf der für die Videokamera sichtbaren Seite jedoch Merkmale auf, die die Berechnung eines optischen Flusses gestatten, kann mit Hilfe des optischen Flusses für einzelne Entfernungsbildpunkte auf der Buskontur eine laterale Geschwindigkeitskomponente berechnet werden. Dies ist insbesondere auch dann wichtig, wenn der Bus durch Verdeckung zu verschwinden scheint.

Hierbei können auch Merkmale auf dem Gegenstand, d.h. dem Bus 102, verwendet werden, die nicht nur in der Abtastebene, sondern auch oberhalb bzw. unterhalb dieser liegen, sofern der optische Fluss entsprechend extra- oder interpolierbar ist.

Ein weiterer Vorteil ergibt sich im Hinblick auf die Trennung von Objekten.

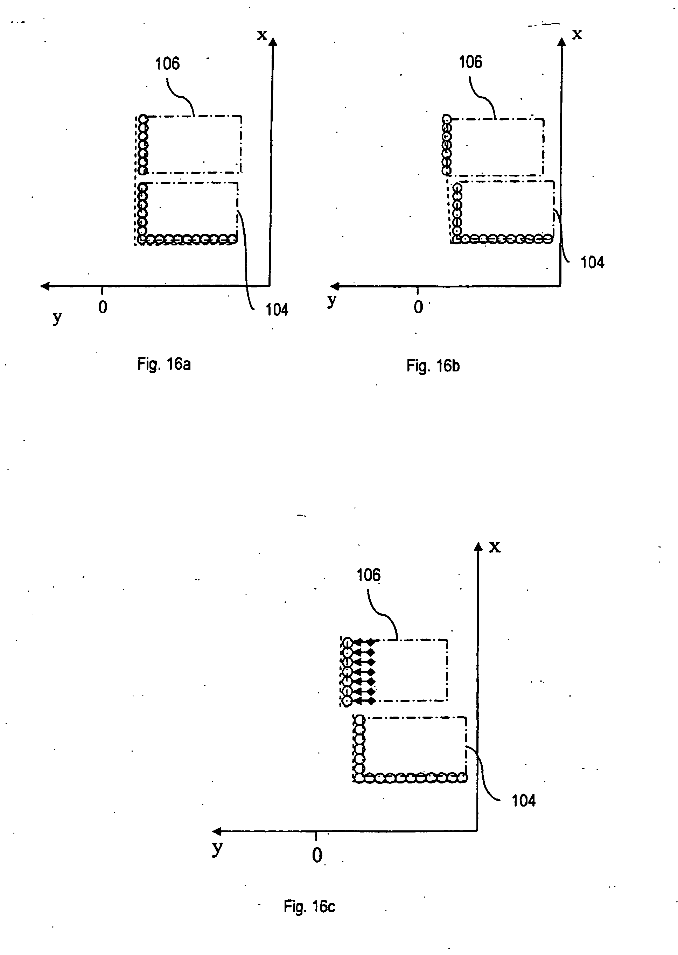

In Fig. 16a und 16b ist als Ausschnitt aus einem Entfernungsbild eine Situation gezeigt, in der zunächst zwei durch strichpunktierte Linien angedeutete Fahrzeuge 104 und 106 eng benachbart quer zur Blickrichtung parken und dann das hintere Fahrzeug 106 ausparkt und sich dabei quer zur Blickrichtung bewegt. Wie in Fig. 16a und 16b gezeigt, würde diese Situation mit einer Objektverfolgung allein auf der Basis von tiefenaufgelösten Bildern so ausgewertet, dass nur eine durch eine gestrichelte Linie angedeutete Objektkontur eines einzelnen Objekts bewegt wird.

Wird jedoch eines der zuvor geschilderten erfindungsgemäßen Verfahren verwendet, kann erkannt werden, dass das dem Fahrzeug 106 entsprechende Segment nur Entfernungsbildpunkte enthält, die einen anderen optischen Fluss aufweisen als die Entfernungsbildpunkte des dem Fahrzeug 106 entsprechenden Segments. Es würden daher nicht beide Segmente dem gleichen Objekt zugeordnet.

Im vorhergehenden Beispiel kann man sich weiter vorstellen, dass ein Fußgänger zwischen den parkenden Fahrzeugen auf die Straße tritt. Mit einer Objektverfolgung allein auf der Basis von tiefenaufgelösten Bildern kann der Fußgänger meist erst von den parkenden Fahrzeugen separiert werden, wenn er sich vom Hintergrund, d.h. den parkenden Fahrzeugen in lateraler oder longitudinaler Richtung entfernt hat. In der Praxis bedeutet dies, dass der Fußgänger sich häufig bereits auf der Straße befindet, bevor er durch eine solche Objektverfolgung sicher als eigenständiges Objekt erkannt werden kann. Wird jedoch zusätzlich der optische Fluss berechnet und zur Verarbeitung der Entfernungsbildpunkte herangezogen, so kann der Fußgänger frühzeitig als selbstbewegtes Objekt erkannt werden, auch wenn er noch teilweise von einem Fahrzeug verdeckt ist.

Da jedoch der optische Fluss nur für starre Objekte zuverlässig bestimmt werden kann, ist hier eine zusätzliche alternative Detektion vorstellbar. Der optische Fluss in der Region des Fußgängers ist, aufgrund der Armund Beinbewegung, stark inhomogen und unterscheidet sich dadurch deutlich von seiner Umgebung bzw. seinem Hintergrund. Diese Inhomogenität kann detektiert und zur Klassifikation und/oder Wiedererkennung eines Objekts verwendet werden. Beispielsweise kann bei Auftreten eines stark inhomogenen optischen Flusses für ein dem Fußgänger entsprechendes Objekt eine Fußgängerhypothese aufgestellt werden.

Auch ein Fußgänger, der sich direkt vor einer Wand oder einem Fahrzeug bewegt, beispielsweise wenn sich der Fußgänger an der Wand entlang schiebt oder an das Fahrzeug anpresst, kann bei einer Objektverfolgung nur auf der Basis von Entfernungsbildpunkten häufig nicht vom Hintergrund unterschieden werden. Unter Berücksichtigung des optischen Flusses ist dies jedoch, wie soeben geschildert, möglich.

Bei Verwendung von Inhomogenitäten des optischen Flusses ist es auch möglich, selbst Gruppen von in geringem Abstand auftretenden Personen als Gruppe von Fußgängern zu erkennen, sodass ein entsprechendes Objekt als Fußgängergruppe klassifizierbar ist.

### Bezugszeichenliste

- 10: Fahrzeug
- 12: Laserscanner
- 14: Videosystem
- 16: monokulare Videokamera
- 18: Datenverarbeitungseinrichtung
- 20: Gegenstand
- 22: Erfassungsbereich des Laserscanners
- 24: Laserstrahlungsbündel
- 26: Gegenstandspunkt, Entfernungsbildpunkt
- 28: Abtastebene
- 30: CCD-Flächensensor
- 32: optische Achse
- 34: Linse
- 36: Erfassungsbereich des Videosystems
- 38: Überwachungsbereich
- 40: Bildebene
- 42: optisches Zentrum
- 44: Entfernungsbildpunkt des vorhergehenden Zyklus
- 46: Schnittpunkt
- 48: Verschiebungsvektor
- 50: Kraftfahrzeug
- 52: Fahrbahn
- 53: Gegenstände
- 54: Entfernungsbildpunkte
- 55: optische Flussvektoren
- 56: prädizierte Lage
- 58: aktueller Entfernungsbildpunkt
- 59: projizierter Entfernungsbildpunkt
- 60, 60': Seitenfläche
- 62: Gegenstandspunkt
- 63: Gegenstandspunkt
- 64: Gerade
- 66: Gerade
- 68: Gerade
- 70: projizierter Entfernungsbildpunkt
- 72: Laserscanner
- 74, 74', 74", 74"': Abtastebenen
- 76: Datenverarbeitungseinrichtung
- 78, 78', 78", 78"': Entfernungsbildpunkte
- 80", 80"': Entfernungsbildpunkte
- 81, 81', 81", 81"': projizierte Entfernungsbildpunkte
- 82: Bezugspunkt des Radars
- 84: Verschiebungsvektor
- 86: Entfernungsbildpunkt
- 88: Strahl
- 90: radiale Geschwindigkeitskomponente
- 92: Radialverschiebung
- 94: Gerade
- 96: prädizierte Lage
- 98: Personenkraftwagen
- 100: Personenkraftwagen
- 102: Bus
- 103: Segment
- 104: Fahrzeug
- 106: Fahrzeug

## Patentansprüche

1. Verfahren zur Verarbeitung von zyklisch erfassten, tiefenaufgelösten Bildern und Videobildern eines gemeinsamen Erfassungsbereichs (38), die jeweils Gegenstandspunkten (26) auf wenigstens einem Gegenstand in dem Erfassungsbereich entsprechende Entfernungsbildpunkte bzw. Videobildpunkte umfassen, bei dem in aufeinander folgenden Zyklen für jeweils wenigstens einen Entfernungsbildpunkt (44, 58, 62, 78, 78', 78", 78-", 80", 80"', 86) für einen dem Entfernungsbildpunkt (44, 58, 62, 78, 78', 78", 78"', 80", 80"', 86) entsprechenden Gegenstandspunkt ein optischer Fluss (55) anhand der zyklisch erfassten Videobilder ermittelt wird,
**dadurch gekennzeichnet,**
**dass** für wenigstens einen Entfernungsbildpunkt (44, 58, 62, 78, 78', 78", 78"', 80", 80"', 86) in einem aktuellen Zyklus in Abhängigkeit von dem entsprechenden optischen Fluss Daten in Bezug auf die Lage eines dem Entfernungsbildpunkt (44, 58, 62, 78, 78', 78", 78"', 80", 80"', 86) in dem aktuellen Zyklus entsprechenden Gegenstandspunktes in einem späteren Zyklus prädiziert werden.

2. Verfahren nach Anspruch 1,
**dadurch gekennzeichnet,**
**dass** für den Entfernungsbildpunkt (44, 58, 62, 78, 78', 78", 78"', 80", 80"', 86) in Abhängigkeit von dem ermittelten optischen Fluss (55) ein Schätzwert für eine Geschwindigkeit oder eine der Geschwindigkeit entsprechende Verschiebung (48, 84) des dem Entfernungsbildpunkt (44, 58, 62, 78, 78', 78", 78"', 80", 80"', 86) entsprechenden Gegenstandspunktes in einem vorgegebenen Zeitintervall ermittelt wird.

3. Verfahren nach Anspruch 1 oder 2,
**dadurch gekennzeichnet,**
**dass** wenigstens einem der Entfernungsbildpunkte (86) eine von einem Sensor ermittelte Radialgeschwindigkeit (90) zugeordnet ist, und
**dass** für den Entfernungsbildpunkt (86) unter Verwendung eines entsprechenden optischen Flusses eine transversale Geschwindigkeitskomponente und/oder eine entsprechende Verschiebung (84) in einem vorgegebenen Zeitintervall ermittelt wird.

4. Verfahren nach einem der vorhergehenden Ansprüche,
**dadurch gekennzeichnet,**
**dass** ein einem Entfernungsbildpunkt (44) entsprechender Punkt (46) in einer zur Definition des optischen Flusses verwendeten Bildebene (40), für den der optische Fluss ermittelt wird, **dadurch** bestimmt wird, dass der Entfernungsbildpunkt (44) entlang einer Geraden, die durch den Entfernungsbildpunkt (44) und ein optisches Zentrum (42) eines das Videobild erfassenden Videosystems (14) verläuft, auf die zur Definition des optischen Flusses verwendeten verläuft, auf die zur Definition des optischen Flusses verwendeten Bildebene (40) projiziert wird.

5. Verfahren nach einem der vorhergehenden Ansprüche,
**dadurch gekennzeichnet,**
**dass** eine Wank- und/oder Nickwinkelkompensation durchgeführt wird.

6. Verfahren nach einem der vorhergehenden Ansprüche,
**dadurch gekennzeichnet,**
**dass** die tiefenaufgelösten Bilder Entfernungsbildpunkte (78, 78', 78", 78"', 80", 80"') umfassen, die Gegenstandspunkten in mehreren Abtastebenen (74, 74', 74", 74"') entsprechen.

7. Verfahren nach einem der vorhergehenden Ansprüche,
**dadurch gekennzeichnet,**
**dass** die Videobilder mit einer höheren Frequenz erfasst werden als die tiefenaufgelösten Bilder.

8. Verfahren nach einem der vorhergehenden Ansprüche,
**dadurch gekennzeichnet,**
**dass** der optische Fluss (55) unter Verwendung eines differentiellen Verfahrens bestimmt wird.

9. Verfahren nach einem der vorhergehenden Ansprüche,
**dadurch gekennzeichnet,**
**dass** der optische Fluss unter Verwendung eines Korrelationsverfahrens ermittelt wird.

10. Verfahren nach einem der vorhergehenden Ansprüche,
**dadurch gekennzeichnet,**
**dass** zur Ermittlung des optischen Flusses ein hierarchisches Verfahren verwendet wird.

11. Verfahren nach einem der vorhergehenden Ansprüche,
**dadurch gekennzeichnet,**
**dass** der optische Fluss unter Verwendung eines Korrelationsverfahrens auf einer räumlich groben Skala und eines differentiellen Verfahrens auf einer feineren Skala ermittelt wird.

12. Verfahren nach einem der vorhergehenden Ansprüche,
**dadurch gekennzeichnet,**
**dass** für jeden erfassten Entfernungsbildpunkt (44, 58, 62, 78, 78', 78", 78"', 80", 80"', 86) der optische Fluss ermittelt wird, und dass der ermittelte optische Fluss zur Segmentierung des tiefenaufgelösten Bildes verwendet wird.

13. Verfahren nach einem der vorhergehenden Ansprüche,
**dadurch gekennzeichnet,**
**dass** für jeden erfassten Entfernungsbildpunkt (44, 58, 62, 78, 78', 78", 78"', 80", 80"', 86) eine Geschwindigkeit oder eine der Geschwindigkeit entsprechende Verschiebung (48, 84) in Abhängigkeit von dem entsprechenden optischen Fluss ermittelt wird, und dass die ermittelten Geschwindigkeiten oder die den Geschwindigkeiten entsprechenden Verschiebungen (48, 84) zur Segmentierung des tiefenaufgelösten Bildes verwendet werden.

14. Verfahren nach einem der vorhergehenden Ansprüche,
**dadurch gekennzeichnet,**
**dass** für den wenigstens einen Entfernungsbildpunkt (44, 58, 62, 78, 78', 78", 78"', 80", 80"', 86) in dem aktuellen Zyklus in Abhängigkeit von dem entsprechenden optischen Fluss eine Geschwindigkeit oder eine der Geschwindigkeit entsprechende Verschiebung (48, 84) während eines Zeitraums zwischen dem aktuellen und dem späteren Zyklus ermittelt wird, und
**dass** aus dieser Geschwindigkeit oder der der Geschwindigkeit entsprechenden Verschiebung (48, 84) Lagekoordinaten eines dem Gegenstandspunkt in dem folgenden Zyklus entsprechenden Entfernungsbildpunktes (44, 58, 62, 78, 78', 78", 78"', 80", 80"', 86) prädiziert werden.

15. Verfahren nach einem der vorhergehenden Ansprüche,
**dadurch gekennzeichnet,**
**dass** für den wenigstens einen Entfernungsbildpunkt (44, 62, 80', 86) in dem aktuellen Zyklus in einer Fläche (40), in der der optische Fluss ermittelt wird, eine Lage eines Punktes in einem späteren Zyklus prädiziert wird, der dem dem Entfernungsbildpunkt (44, 62, 80', 86) in dem aktuellen Zyklus entsprechenden Gegenstandspunkt in dem späteren Zyklus entspricht.

16. Verfahren nach einem der vorhergehenden Ansprüche,
**dadurch gekennzeichnet,**
**dass** wenigstens einem erfassten Entfernungsbildpunkt (44, 62, 80', 86) in einem vorhergehenden Zyklus unter Verwendung des entsprechenden optischen Flusses und wenigstens eines Zuordnungskriteriums wenigstens ein Entfernungsbildpunkt (58, 78") in dem aktuellen Zyklus zugeordnet wird, der dem im Wesentlichen gleichen Gegenstandspunkt entspricht, wie der Entfernungsbildpunkt (44, 62, 80', 86) in dem vorhergehenden Zyklus.

17. Verfahren nach Anspruch 16,
**dadurch gekennzeichnet,**
**dass** tiefenaufgelöste Bilder mit Entfernungsbildpunkten (78, 78', 78", 78"', 80", 80"') verwendet werden, die Gegenstandspunkten in mehreren Abtastebenen (74, 74', 74", 74"') entsprechen, und dass nur Entfernungsbildpunkte gleicher Abtastebenen einander zugeordnet werden.

18. Verfahren nach Anspruch 16,
**dadurch gekennzeichnet,**
**dass** tiefenaufgelöste Bilder mit Entfemungsbildpunkten (78, 78', 78", 78"', 80", 80"') verwendet werden, die Gegenstandspunkten in mehreren Abtastebenen (74, 74', 74", 74"') entsprechen, und dass bei der Zuordnung für einen Entfernungsbildpunkt in einer Abtastebene in dem aktuellen Zyklus das Zuordnungskriterium für Entfernungsbildpunkte in allen Abtastebenen geprüft wird.

19. Verfahren nach einem der Ansprüche 16 bis 18,
**dadurch gekennzeichnet,**
**dass** aus dem optischen Fluss für den dem Gegenstandspunkt entsprechenden Entfernungsbildpunkt (44, 62, 80', 86) in dem vorhergehenden Zyklus Lagekoordinaten (56, 96) eines Entfernungsbildpunktes (58, 63, 78") in dem aktuellen Zyklus prädiziert werden, der demselben Gegenstandspunkt entspricht, und
**dass** das Zuordnungskriterium einen Unterschied zwischen den prädizierten Lagekoordinaten (56, 96) und den Lagekoordinaten des Entfernungsbildpunktes (58, 63, 78") in dem aktuellen Zyklus betrifft.

20. Verfahren nach einem der Ansprüche 16 bis 19,
**dadurch gekennzeichnet,**
**dass** aus dem optischen Fluss für den dem Gegenstandspunkt entsprechenden Entfernungsbildpunkt (44) in dem vorhergehenden Zyklus unter Verwendung der Abbildungsgeometrie eines zur Erfassung des Videobildes verwendeten Videosystems eine Kurve (64, 66) ermittelt wird, auf der prädizierte Lagekoordinaten für den Gegenstandspunkt in dem aktuellen Zyklus liegen, und
**dass** das Zuordnungskriterium einen Abstand eines Entfernungsbildpunktes (63) des aktuellen Zyklus von der Kurve (64, 66) oder einen Abstand eines Entfernungsbildpunkts des aktuellen Zyklus von der Kurve (66) in der Abtastebene (28), in der der Entfernungsbildpunkt liegt, betrifft.

21. Verfahren nach einem der Ansprüche 16 bis 18,
**dadurch gekennzeichnet,**
**dass** der Entfernungsbildpunkt (44) in dem vorhergehenden und wenigstens einige der Entfernungsbildpunkte (58) in dem aktuellen Zyklus in eine zur Definition des optischen Flusses verwendete Fläche (40) projiziert werden,
**dass** unter Verwendung des optischen Flusses aus dem projizierten Entfernungsbildpunkt des vorhergehenden Zyklus eine auf die Fläche (40) projizierte prädizierte Lage des dem Entfernungsbildpunkt zugeordneten Gegenstandspunktes ermittelt wird, und
**dass** das Zuordnungskriterium einen Unterschied zwischen der prädizierten Lage und jeweils den Lagen (59) der projizierten Entfernungsbildpunkte des aktuellen Zyklus betrifft.

22. Verfahren nach einem der Ansprüche 16 bis 18,
**dadurch gekennzeichnet,**
**dass** der Entfernungsbildpunkt (44) in dem vorhergehenden und wenigstens einige der Entfernungsbildpunkte (58) in dem aktuellen Zyklus in eine zur Definition des optischen Flusses verwendete Fläche (40) projiziert werden,
**dass** unter Verwendung des optischen Flusses aus dem projizierten Entfernungsbildpunkt des vorhergehenden Zyklus auf der Fläche (40) eine Kurve mit auf die Fläche (40) projizierten, prädizierten Lagen des dem Entfernungsbildpunkt zugeordneten Gegenstandspunktes ermittelt wird, und
**dass** das Zuordnungskriterium einen Unterschied zwischen der Kurve und jeweils der Lagen (59) der projizierten Entfernungsbildpunkte des aktuellen Zyklus betrifft.

23. Verfahren nach einem der Ansprüche 16 bis 22,
**dadurch gekennzeichnet,**
**dass** aus den Lagen zweier einander zugeordneter Entfernungsbildpunkte in aufeinanderfolgenden Zyklen, die einem im Wesentlichen gleichen Gegenstandspunkt entsprechen, eine Geschwindigkeit des Gegenstandspunktes ermittelt wird.

24. Verfahren nach einem der Ansprüche 20 bis 23,
dass in dem Fall, dass einem Entfernungsbildpunkt aus einem vorhergehenden Zyklus zwei Entfernungsbildpunkte in dem aktuellen Zyklus zugeordnet werden, eine Geschwindigkeit eines dem Entfernungsbildpunkt in dem vorhergehenden Zyklus entsprechenden Gegenstandspunktes auf der Basis des Schnittpunkts der Kurve mit einer die zugeordneten Entfernungsbildpunkte bzw. zugeordneten projizierten Entfernungsbildpunkte verbindenden Geraden bestimmt wird.

25. Verfahren nach einem der Ansprüche 16 bis 24,
**dadurch gekennzeichnet,**
**dass** das Verfahren Schritte für eine Verfolgung von Objekten umfasst, die Gegenständen (20, 50, 53, 98, 100, 102, 104, 106) in dem gemeinsamen Erfassungsbereich entsprechen,
**dass** die tiefenaufgelösten Bilder segmentiert werden,
**dass** wenigstens einem Entfernungsbildpunkt (44, 62, 80', 86) eines vorhergehenden Zyklus ein Entfernungsbildpunkt (58, 63, 78") eines aktuellen Zyklus zugeordnet wird, und
**dass** die Zuordnung der Entfernungsbildpunkte zur Zuordnung von Segmenten zu Objekten in dem aktuellen Zyklus verwendet wird.

26. Verfahren nach Anspruch 25,
**dadurch gekennzeichnet,**
**dass** ein Segment in dem vorhergehenden Zyklus, dem der Entfernungsbildpunkt des vorhergehenden Zyklus zugeordnet ist, einem Segment in dem aktuellen Zyklus zugeordnet wird, dem der Entfernungsbildpunkt in dem aktuellen Zyklus zugeordnet ist.

27. Verfahren nach Anspruch 25 oder 26,
**dadurch gekennzeichnet,**
**dass** für wenigstens ein Segment eine Segmenteigenschaft über dessen Lage und Geometrie hinaus ermittelt wird, und
**dass** die Segmenteigenschaft zur Segment-Objektzuordnung verwendet wird.

28. Verfahren nach einem der Ansprüche 25 bis 27,
**dadurch gekennzeichnet,**
**dass** für wenigstens ein Segment als Segmenteigenschaft eine räumliche Inhomogenität des optischen Flusses der dem Segment zugeordneten Entfernungsbildpunkte oder in Umgebungen derselben ermittelt wird.

29. Computerprogramm mit Programmcode-Mitteln, um das Verfahren nach einem der Ansprüche 1 bis 28 durchzuführen, wenn das Programm auf einem Computer ausgeführt wird.

30. Computerprogrammprodukt mit Programmcode-Mitteln, die auf einem computerlesbaren Datenträger gespeichert sind, um das Verfahren nach einem der Ansprüche 1 bis 28 durchzuführen, wenn das Computerprogrammprodukt auf einem Computer ausgeführt wird.

31. Vorrichtung zur Überwachung eines Überwachungsbereichs (38) mit einem Sensor (12, 72) für elektromagnetische Strahlung, mittels dessen in zeitlicher Folge tiefenaufgelöste Bilder eines ersten Erfassungsbereichs (22) erfassbar sind,
einem Videosystem (14), mittels dessen in einer auf die Erfassungszeiten der tiefenaufgelösten Bilder abgestimmten zeitlichen Folge Videobilder eines zweiten Erfassungsbereichs (36), der sich wenigstens teilweise mit dem ersten Erfassungsbereich (22) in dem Überwachungsbereich (38) überschneidet, erfassbar sind, wobei die tiefenaufgelösten Bilder und die Videobilder jeweils Gegenstandspunkten (26) auf wenigstens einem Gegenstand in dem Überwachungsbereich entsprechende Entfernungsbildpunkte bzw. Videobildpunkte umfassen,
einer ersten Einrichtung (18, 76) zur Verarbeitung von mit dem Sensor (12, 72) für elektromagnetische Strahlung erfassten tiefenaufgelösten Bildern, und
einer zweiten Einrichtung (18, 76) zur Ermittlung eines optischen Flusses (55) anhand der zyklisch erfassten Videobilder für wenigstens Teilbereiche der Videobilder, die durch Daten bestimmbar sind, die aus den tiefenaufgelösten Bildern mit Hilfe der ersten Einrichtung (18, 76) zur Verarbeitung tiefenaufgelöster Bilder ermittelbar sind,
**gekennzeichnet durch**
Mittel zur Prädiktion von Daten in Bezug auf die Lage eines dem Entfernungsbildpunkt (44, 58, 62, 78, 78', 78", 78"', 80", 80"', 86) in dem aktuellen Zyklus entsprechenden Gegenstandspunktes in einem späteren Zyklus für wenigstens einen Entfernungsbildpunkt (44, 58, 62, 78, 78', 78", 78"', 80", 80"', 86) in einem aktuellen Zyklus in Abhängigkeit von dem entsprechenden optischen Fluss.

32. Vorrichtung nach Anspruch 31,
**dadurch gekennzeichnet,**
**dass** die Einrichtungen (18, 76) zur Ermittlung des optischen Flusses und zur Verarbeitung der tiefenaufgelösten Bilder zur Durchführung eines Verfahrens nach einem der Ansprüche 2 bis 28 ausgebildet sind.

33. Vorrichtung nach Anspruch 31 oder 32,
**dadurch gekennzeichnet,**
**dass** der Sensor für elektromagnetische Strahlung einen Laserscanner (12, 72) umfasst.

34. Vorrichtung nach Anspruch 31 oder 32,
**dadurch gekennzeichnet,**
**dass** der Sensor für elektromagnetische Strahlung einen Radarsensor umfasst.

## Claims

1. A method for processing cyclically detected, depth-resolved images and video images of a common detection zone (38) which each include distance picture elements or video picture elements corresponding to real object points (26) on at least one real object in the detection zone, wherein in sequential cycles an optical flow (55) is determined with respect to the cyclically detected video images for in each case at least one distance picture element (44, 58, 62, 78, 78', 78", 78"', 80", 80"', 86) for a real object point corresponding to the distance picture element (44, 58, 62, 78, 78', 78", 78"', 80", 80"', 86),
**characterised in that**,
for at least one distance picture element (44, 58, 62, 78, 78', 78", 78"', 80", 80"', 86) in a then current cycle, data are predicted in dependence on the corresponding optical flow with respect to the position of a real object point in a later cycle corresponding to the distance picture element (44, 58, 62, 78, 78', 78", 78"', 80", 80"', 86) in the then current cycle.

2. A method in accordance with claim 1,
**characterised in that**,
for the distance picture element (44, 58, 62, 78, 78', 78", 78"', 80", 80"', 86), an estimated value is determined in a preset time interval in dependence on the determined optical flow for a speed or for a displacement (48, 84) of the real object point corresponding to the distance picture element (44, 58, 62, 78, 78', 78", 78"', 80", 80"', 86).

3. A method in accordance with claim 1 or claim 2,
**characterised in that**
a radial speed (90) determined by a sensor is associated with at least one of the distance picture elements (86); and
**in that** a transverse speed component and/or a corresponding displacement (84) is determined in a preset time interval for the distance picture element (86) while using a corresponding optical flow.

4. A method in accordance with any one of the preceding claims,
**characterised in that**
a point (46) which corresponds to a distance picture element (44) in an image plane (40) used for the definition of the optical flow and for which the optical flow is ascertained, is determined **in that** the distance picture element (44) is projected onto the image plane (40) used for the definition of the optical flow along a straight line which extends through the distance picture element (44) and an optical centre (42) of a video system (14) detecting the video image.

5. A method in accordance with any one of the preceding claims,
**characterised in that**
a roll angle compensation and/or a pitch angle compensation is carried out.

6. A method in accordance with any one of the preceding claims,
**characterised in that**
the depth-resolved images include distance picture elements (78, 78', 78", 78"', 80", 80"') which correspond to real object points in a plurality of scanning planes (74, 74', 74", 74"').

7. A method in accordance with any one of the preceding claims,
**characterised in that**
the video images are detected at a higher frequency than the depth-resolved images.

8. A method in accordance with any one of the preceding claims,
**characterised in that**
the optical flow (55) is determined using a differential process.

9. A method in accordance with any one of the preceding claims,
**characterised in that**
the optical flow is determined using a correlation process.

10. A method in accordance with any one of the preceding claims,
**characterised in that**
a hierarchical process is used to determine the optical flow.

11. A method in accordance with any one of the preceding claims,
**characterised in that**
the optical flow is determined using a correlation process on a spatially rough scale and using a differential process on a finer scale.

12. A method in accordance with any one of the preceding claims,
**characterised in that**
the optical flow is determined for every detected distance picture element (44, 58, 62, 78, 78', 78", 78"', 80", 80"', 86); and
**in that** the determined optical flow is used to segment the depth-resolved image.

13. A method in accordance with any one of the preceding claims,
**characterised in that**
a speed or a displacement (48, 84) corresponding to the speed is determined for every detected distance picture element (44, 58, 62, 78, 78', 78", 78"', 80", 80"', 86) in dependence on the corresponding optical flow; and
**in that** the determined speeds or the displacements (48, 84) corresponding to the speeds are used to segment the depth-resolved image.

14. A method in accordance with any one of the preceding claims,
**characterised in that**
a speed or a displacement (48, 84) corresponding to the speed is determined during a period between the then current cycle and the later cycle for the at least one distance picture element (44, 58, 62, 78, 78', 78", 78"', 80", 80"', 86) in the then current cycle in dependence on the corresponding optical flow; and
**in that** position coordinates of a distance picture element (44, 58, 62, 78, 78', 78", 78"', 80", 80"', 86) corresponding to the distance point in the following cycle are predicted from this speed or from the displacement (48, 84) corresponding to the speed.

15. A method in accordance with any one of the preceding claims,
**characterised in that**,
for the at least one distance picture element (44, 62, 80', 86) in the then current cycle in a surface (40) in which the optical flow is determined, a position of a point in a later cycle is predicted which corresponds to the real object point in the later cycle corresponding to the distance picture element (44, 62, 80', 86) in the then current cycle.

16. A method in accordance with any one of the preceding claims,
**characterised in that**
at least one distance picture element (58, 78") in the then current cycle which corresponds to substantially the same real object point as the distance picture element (44, 62, 80', 86) in the preceding cycle is associated with at least one detected distance picture element (44, 62, 80', 86) in a preceding cycle while using the corresponding optical flow and at least one association criterion.

17. A method in accordance with claim 16,
**characterised in that**
depth-resolved images are used having distance picture elements (78, 78', 78", 78"', 80", 80"') which correspond to real object points in a plurality of scanning planes (74, 74', 74"); and
**in that** only distance picture elements of the same scanning planes are associated with one another.

18. A method in accordance with claim 16,
**characterised in that**
depth-resolved images are used having distance picture elements (78, 78', 78", 78"', 80", 80"') which correspond to real object points in a plurality of scanning planes (74, 74', 74", 74"'); and
**in that**, on the association for a distance picture element in a scanning plane in the then current cycle, the association criterion for distance picture elements in all scanning planes is checked.

19. A method in accordance with any one of the claims 16 to 18,
**characterised in that**
position coordinates (56, 96) of a distance picture element (58, 63, 78") in the then current cycle which corresponds to the same real object point is predicted from the optical flow for the distance picture element (44, 62, 80', 86) corresponding to the real objet point in the preceding cycle; and
**in that** the association criterion relates to a difference between the predicted position coordinates (56, 96) and the position coordinates of the distance picture element (58, 63, 78") in the then current cycle.

20. A method in accordance with any one of the claims 16 to 19,
**characterised in that**
a curve (64, 66) on which predicted position coordinates for the real object point in the then current cycle lie is determined from the optical flow for the distance picture element (44) corresponding to the real object point in the preceding cycle while using the imaging geometry of a video system used for detecting the video image; and **in that** the association criterion relates to a spacing of a distance picture element (63) of the then current cycle from the curve (64, 66) or to a spacing of a distance picture element of the then current cycle from the curve (66) in the scanning plane (28) in which the distance picture element lies.

21. A method in accordance with any one of the claims 16 to 18,
**characterised in that**
the distance picture element (44) in the preceding cycle and at least some of the distance picture elements (58) in the then current cycle are projected into a surface (40) used for the definition of the optical flow;
**in that** a predicted position of the real object point associated with the distance picture element and projected onto the surface (40) is determined while using the optical flow from the projected distance picture element of the preceding cycle; and
**in that** the association criterion relates to a difference between the predicted position and the respective positions (59) of the projected distance picture elements of the then current cycle.

22. A method in accordance with any one of the claims 16 to 18,
**characterised in that**
the distance picture element (44) in the preceding cycle and at least some of the distance picture elements (58) in the then current cycle are projected into a surface (40) used for the definition of the optical flow;
**in that** a curve having predicted positions of the real object point associated with the distance picture element and projected onto the surface (40) is determined while using the optical flow from the projected distance picture element of the preceding cycle; and **in that** the association criterion relates to a difference between the curve and the respective positions (59) of the projected distance picture elements of the then current cycle.

23. A method in accordance with any one of the claims 16 to 22,
**characterised in that**
a speed of the real object point is determined from the positions of two mutually associated distance picture elements in cycles following one another which correspond to a substantially like real object point.

24. A method in accordance with any one of the claims 20 to 23,
**characterized in that**, in the case that two distance picture elements in the then current cycle are associated with one distance picture element from a preceding cycle, a speed of a real object point corresponding to the distance picture element in the preceding cycle is determined on the basis of the point of intersection of the curve with a straight line correcting the associated distance picture elements or associated projected distance picture elements.

25. A method in accordance with any one of the claims 16 to 24,
**characterised in that**
the method comprises steps for a tracking of objects which correspond to real objects (20, 50, 53, 98, 100, 102, 104, 106) in the common detection zone;
**in that** the depth-resolved images are segmented;
**in that** a distance picture element (58, 63, 78") of a then current cycle is associated with at least one distance picture element (44, 62, 80', 86) of a preceding cycle; and
**in that** the association of the distance picture elements is used for associating segments with objects in the then current cycle.

26. A method in accordance with claim 25,
**characterised in that**
a segment in the preceding cycle, with which the distance picture element of the preceding cycle is associated, is associated with a segment in the then current cycle with which the distance picture element in the then current cycle is associated.

27. A method in accordance with claim 25 or claim 26,
**characterised in that**
a segment property is determined for at least one segment beyond its position and geometry; and
**in that** the segment property is used for the segment-object association.

28. A method in accordance with any one of the claims 25 to 27,
**characterised in that**
a spatial inhomogeneity of the optical flow of the distance picture elements associated with the segment or in environments thereof is determined for at least one segment as a segment property.

29. A computer program with program code means to carry out the method in accordance with any one of the claims 1 to 28, when the program is installed on a computer.

30. A computer program product with program code means which are stored on a computer legible data carrier to carry out the method in accordance with any one of the claims 1 to 28, when the computer program product is installed on a computer.

31. An apparatus for monitoring a monitored zone (38) comprising a sensor (12, 72) for electromagnetic radiation, by means of which depth-resolved images of a first detection zone (22) can be detected in time sequence;
a video system (14) by means of which video images of a second detection zone (36) which at least partly overlaps the first detection zone (22) in the monitored zone (38) can be detected in time sequence coordinated with the detection times of the depth-revolved images, wherein the depth-resolved images and the video images each include distance picture elements or video picture elements corresponding to real object points (26) on at least one real object in the monitored zone;
a first device (18, 76) for processing depth-resolved images detected using the sensor (12, 72) for electromagnetic radiation; and
a second device (18, 76) for determining an optical flow (55) with reference to the cyclically detected video images for at least part regions of the video images which can be determined by data which can be determined from the depth-resolved images with the aid of the first device (18, 76) for processing depth resolved images, **characterised by**
means for predicting data with respect to the position of a real object point corresponding to the distance picture element (44, 58, 62, 78, 78', 78", 78"', 80", 80"', 86) in the then current cycle in a later cycle for at least one distance picture element (44, 58, 62, 78, 78', 78", 78"', 80", 80"', 86) in a then current cycle in dependence on the corresponding optical flow.

32. An apparatus in accordance with claim 31,
**characterised in that**
the devices (18, 76) for determining the optical flow and for processing the depth-resolved images are configured for carrying out a method in accordance with any one of the claims 2 to 28.

33. An apparatus in accordance with claim 31 or claim 32,
**characterised in that**
the sensor for electromagnetic radiation includes a laser scanner (12, 72).

34. An apparatus in accordance with claim 31 or claim 32,
**characterised in that**
the sensor for electromagnetic radiation includes a radar sensor.

## Revendications

1. Procédé pour le traitement d'images à résolution de profondeur et d'images vidéo prises de façon cyclique dans une zone de prise de vue commune (38), qui comprennent respectivement des points d'images de distance ou respectivement des points d'images vidéo qui correspondent à des points-objets respectifs (26) sur au moins un objet dans la zone de prise de vue, dans lequel, dans des cycles successifs et respectivement pour au moins un point d'image de distance (44, 58, 62, 78, 78', 78", 78"', 80", 80"', 86) pour un point-objet qui correspond au point d'image de distance (44, 58, 62, 78, 78', 78", 78"', 80", 80"', 86), on détermine un flux optique (55) à l'aide des images vidéo prises de façon cyclique,
**caractérisé en ce que**, pour au moins un point d'image de distance (44, 58, 62, 78, 78', 78", 78"', 80", 80"', 86) dans un cycle actuel, en fonction du flux optique correspondant, on effectue une prédiction des données dans un cycle ultérieur, par référence à la position d'un point-objet correspondant au point d'image de distance (44, 58, 62, 78, 78', 78", 78"', 80", 80"', 86) dans le cycle actuel.

2. Procédé selon la revendication 1,
**caractérisé en ce que** pour le point d'image de distance (44, 58, 62, 78, 78', 78", 78"', 80", 80"', 86) et en fonction du flux optique déterminé (55), on détermine une valeur estimée pour une vitesse ou pour un déplacement (48, 84), correspondant à la vitesse, du point-objet correspondant au point d'image de distance (44, 58, 62, 78, 78', 78", 78"', 80", 80"', 86) dans un intervalle temporel prédéterminé.

3. Procédé selon la revendication 1 ou 2,
**caractérisé en ce que**
une vitesse radiale (90) déterminée par un capteur est associée à l'un au moins des points d'images de distance (86), et
pour le point d'image de distance (86), on détermine une composante de vitesse transversale et/ou un déplacement correspondant (84) dans un intervalle temporel prédéterminé, en utilisant un flux optique correspondant.

4. Procédé selon l'une des revendications précédentes,
**caractérisé en ce que**
un point (46), correspondant à un point d'image de distance (44), dans un plan d'image (40) utilisé pour la définition du flux optique et pour lequel le flux optique est déterminé, est défini du fait que le point d'image de distance (44) est projeté le long d'une droite, qui passe par le point d'image de distance (44) et par un centre optique (42) d'un système vidéo (14) qui effectue la prise de vue des images vidéo, sur un plan d'image (40) utilisé pour la définition du flux optique.

5. Procédé selon l'une des revendications précédentes,
**caractérisé en ce que** l'on exécute une compensation d'angle de roulis et/ou d'angle de tangage.

6. Procédé selon l'une des revendications précédentes,
**caractérisé en ce que** les images à résolution de profondeur comprennent des points d'images de distance (78, 78', 78", 78"', 80", 80"') qui correspondent à des points-objets dans plusieurs plans de palpage (74, 74', 74", 74"').

7. Procédé selon l'une des revendications précédentes,
**caractérisé en ce que** les images vidéo sont prises à une fréquence plus élevée que les images à résolution de profondeur.

8. Procédé selon l'une des revendications précédentes,
**caractérisé en ce que** le flux optique (55) est déterminé en utilisant un procédé différentiel.

9. Procédé selon l'une des revendications précédentes,
**caractérisé en ce que** le flux optique est déterminé en utilisant un procédé de corrélation.

10. Procédé selon l'une des revendications précédentes,
**caractérisé en ce que** l'on utilise un procédé hiérarchique pour déterminer le flux optique.

11. Procédé selon l'une des revendications précédentes,
**caractérisé en ce que** le flux optique est déterminé en utilisant un procédé de corrélation sur une échelle grossière dans l'espace et un procédé différentiel sur une échelle plus fine.

12. Procédé selon l'une des revendications précédentes,
**caractérisé en ce que**, pour chaque point d'image de distance (44, 58, 62, 78, 78', 78", 78"', 80", 80"', 86) détecté on détermine le flux optique, et **en ce que** le flux optique déterminé est utilisé pour segmenter l'image à résolution de profondeur.

13. Procédé selon l'une des revendications précédentes,
**caractérisé en ce que** pour chaque point d'image de distance (44, 58, 62, 78, 78', 78", 78"', 80", 80"', 86) détecté, on détermine une vitesse ou un déplacement (48, 84), correspondant à la vitesse, en fonction du flux optique correspondant, et **en ce que** les vitesses déterminées ou les déplacements (48, 84) correspondant aux vitesses, sont utilisés pour segmenter l'image à résolution de profondeur.

14. Procédé selon l'une des revendications précédentes,
**caractérisé en ce que** pour ledit au moins un point d'image de distance (44, 58, 62, 78, 78', 78", 78"', 80", 80"', 86) dans le cycle actuel, on détermine, en fonction du flux optique correspondant, une vitesse ou un déplacement (48, 84) correspondant à la vitesse, pendant une période temporelle entre le cycle actuel et le cycle ultérieur, et
**en ce que** l'on procède, à partir de cette vitesse ou à partir de ce déplacement (48, 84) correspondant à la vitesse, à une prédiction des coordonnées de position d'un point d'image de distance (44, 58, 62, 78, 78', 78", 78"', 80", 80"', 86) correspondant au point-objet dans le cycle suivant.

15. Procédé selon l'une des revendications précédentes,
**caractérisé en ce que** pour ledit au moins un point d'image de distance (44, 62, 80', 86) dans le cycle actuel, on procède à une prédiction, dans une surface (40) dans laquelle le flux optique est déterminé, d'une position d'un point dans un cycle ultérieur, qui correspond au point-objet qui, dans le cycle ultérieur, correspond au point d'image de distance (44, 62, 80', 86) dans le cycle actuel.

16. Procédé selon l'une des revendications précédentes,
**caractérisé en ce que**, en utilisant le flux optique correspondant et au moins un critère d'association, on associe au moins un point d'image de distance (58, 78") dans le cycle actuel à au moins un point d'image de distance (44, 62, 80', 86) détecté dans un cycle précédent, ce point d'image de distance dans le cycle actuel correspondant essentiellement au même point-objet que le point d'image de distance (44, 62, 80', 86) dans le cycle précédent.

17. Procédé selon la revendication 16,
**caractérisé en ce que** l'on utilise des images à résolution de profondeur avec des points d'image de distance (78, 78', 78", 78"', 80", 80"') qui correspondent à des points-objets dans plusieurs plans de palpage (74, 74', 74", 74"'), et **en ce que** l'on associe les uns aux autres uniquement des points d'image de distance dans les mêmes plans de palpage.

18. Procédé selon la revendication 16,
**caractérisé en ce que** l'on utilise des images à résolution de profondeur avec des points d'image de distance (78, 78', 78", 78"', 80", 80"') qui correspondent à des points-objets dans plusieurs plans de palpage (74, 74', 74", 74"'), et **en ce que** pour l'association pour un point d'image de distance dans un plan de palpage on vérifie dans le cycle actuel le critère d'association pour des points d'image de distance dans tous les plans de palpage.

19. Procédé selon l'une des revendications 16 à 18,
**caractérisé en ce qu'**à partir du flux optique, on effectue une prédiction, pour le point d'image de distance (44, 62, 80', 86) correspondant au point-objet dans le cycle précédent, des coordonnées de position (56, 96) d'un point d'image de distance (58, 63, 78") dans le cycle actuel, qui correspond au même point-obj et, et
**en ce que** le critère d'association concerne une différence entre les coordonnées de position (56, 96) prédites et les coordonnées de position du point d'image de distance (58, 63, 78") dans le cycle actuel.

20. Procédé selon l'une des revendications 16 à 19,
**caractérisé en ce qu'**à partir du flux optique pour le point d'image de distance, correspondant au point-objet, dans le cycle précédent et en utilisant la géométrie d'imagerie d'un système vidéo utilisé pour la prise de vue de l'image vidéo, on détermine une courbe (64, 66) sur laquelle sont placées des coordonnées de position prédites pour le point-objet dans le cycle actuel, et
**en ce que** le critère d'association concerne une distance d'un point d'image de distance (63) du cycle actuel par rapport à la courbe (64, 66), ou une distance d'un point d'image de distance du cycle actuel par rapport à la courbe (66) dans le plan de palpage (28) dans lequel est situé le point d'image de distance.

21. Procédé selon l'une des revendications 16 à 18,
**caractérisé en ce que** le point d'image de distance (44) dans le cycle précédent et au moins quelques-uns des points d'image de distance (58) dans le cycle actuel sont projetés dans une surface (40) utilisée pour la définition du flux optique,
**en ce que**, en utilisant le flux optique on détermine à partir du point d'image de distance projeté du cycle précédent une position prédite, projetée sur la surface (40), du point-objet associé au point d'image de distance, et
**en ce que** le critère d'association concerne une différence entre la position prédite et les positions respectives (59) des points d'image de distance projetés du cycle actuel.

22. Procédé selon l'une des revendications 16 à 18,
**caractérisé en ce que** le point d'image de distance (44) dans le cycle précédent et au moins quelques-uns des points d'image de distance (58) dans le cycle actuel sont projetés dans une surface (40) utilisée pour la définition du flux optique,
**en ce qu'**en utilisant le flux optique on détermine, à partir du point d'image de distance projeté du cycle précédent sur la surface (40), une courbe avec des positions prédites, projetées sur la surface (40), du point-objet associé au point le d'image de distance, et
**en ce que** le critère d'association concerne une différence entre la courbe et les positions respectives (59) des points d'images de distance projetés du cycle actuel.

23. Procédé selon l'une des revendications 16 à 22,
**caractérisé en ce que**, à partir des positions de deux points d'image de distance associés l'un à l'autre dans des cycles successifs, qui correspondent à un point-objet essentiellement égal, on détermine une vitesse du point-objet.

24. Procédé selon l'une des revendications 20 à 23,
**caractérisé en ce que**, dans le cas où l'on associe à un point d'image de distance d'un cycle précédent deux points d'image de distance dans le cycle actuel, on détermine une vitesse d'un point-objet correspondant au point d'image de distance dans le cycle précédent en se basant sur l'intersection de la courbe avec une droite qui relie les points d'image de distance associés ou respectivement les points d'images de distance projetés associés.

25. Procédé selon l'une des revendications 16 à 24,
**caractérisé en ce que** le procédé comprend des opérations pour une poursuite d'articles qui correspondent à des objets (20, 50, 53, 98, 100, 102, 104, 106) dans la zone de prise de vue commune,
**en ce que** les images à résolution de profondeur sont segmentées,
**en ce qu'**à au moins un point d'image de distance (44, 62, 80', 86) d'un cycle précédent on associe un point d'image de distance (58, 63, 78") d'un cycle actuel, et
**en ce que** l'association des points d'image de distance est utilisée pour l'association de segments à des objets dans le cycle actuel.

26. Procédé selon la revendication 25,
**caractérisé en ce qu'**un segment dans le cycle précédent, auquel est associé le point d'image de distance du cycle précédent, est associé à un segment dans le cycle actuel, auquel est associé le point d'image de distance dans le cycle actuel.

27. Procédé selon la revendication 25 ou 26,
**caractérisé en ce que** pour au moins un segment, on détermine une propriété du segment au-delà de sa position et de sa géométrie, et
**en ce que** la propriété du segment est utilisée pour l'association segment/obj et.

28. Procédé selon l'une des revendications 25 à 27,
**caractérisé en ce que** pour au moins un segment, on détermine comme propriété du segment un défaut d'homogénéité dans l'espace du flux optique des points d'image de distance associés aux segments ou dans l'environnement de ceux-ci.

29. Programme d'ordinateur comprenant des moyens formant code de programme pour mettre en oeuvre le procédé selon l'une des revendications 1 à 28, quand le programme est exécuté sur un ordinateur.

30. Produit de programme d'ordinateur comprenant des moyens formant code de programme, qui sont mémorisés sur un support de données lisible à l'ordinateur, afin de mettre en oeuvre le procédé selon l'une des revendications 1 à 28 quand le produit de programme d'ordinateur est exécuté sur un ordinateur.

31. Appareil pour surveiller une zone de surveillance (38) avec un capteur (12, 72) pour rayonnement électromagnétique, au moyen duquel il est possible de prendre en succession temporelle des images à résolution de profondeur d'une première zone de prise de vue (22),
un système vidéo (14), au moyen duquel il est possible de prendre, dans une succession temporelle accordée aux instants de prise de vue des images à résolution de profondeur, des images vidéo d'une seconde zone de prise de vue (36) qui se recoupe au moins partiellement avec la première zone de prise de vue (22) dans la zone de surveillance (38), dans lequel les images à résolution de profondeur et les images vidéo comprennent des points d'image de distance ou respectivement des points d'images vidéo correspondant respectivement à des points-objets (26) sur au moins un objet dans la zone de surveillance,
un premier système (18, 76) pour traiter des images à résolution de profondeur prises avec le capteur (18, 72) pour rayonnement électromagnétique, et
un second système (18, 76) pour déterminer un flux optique (55) à l'aide des images vidéo prises de façon cyclique pour au moins des zones partielles des images vidéo, qui peuvent être définies par des données qui peuvent être déterminées à partir des images à résolution de profondeur à l'aide du premier système (18, 76) pour le traitement d'images à résolution de profondeur,
**caractérisé par**
des moyens pour prédire des données par référence à la position d'un point-objet, correspondant au point d'image de distance (44, 58, 62, 78, 78', 78", 78"', 80", 80"', 86) dans le cycle actuel, dans un cycle ultérieur pour au moins un point d'image de distance (44, 58, 62, 78, 78', 78", 78"', 80", 80"', 86) dans un cycle actuel en fonction du flux optique correspondant.

32. Appareil selon la revendication 31,
**caractérisé en ce que** les systèmes (18, 76) pour déterminer le flux optique et pour traiter des images à résolution de profondeur sont réalisés pour mettre en oeuvre un procédé selon l'une des revendications 2 à 28.

33. Appareil selon la revendication 31 ou 32,
**caractérisé en ce que** le capteur pour rayonnement électromagnétique comprend un scanneur à laser (12, 72).

34. Appareil selon la revendication 31 ou 32,
**caractérisé en ce que** le capteur pour rayonnement électromagnétique comprend un capteur radar.
